# EUROPEAN PATENT APPLICATION

(11) **EP 3 641 455 A1**
(43) Date of publication of application: **22.04.2020**
(21) Application number: 18818729.8
(22) Date of filing: 11.06.2018
(51) Int. Cl.: H04W 72/04, H04B 7/0408, H04L 1/18

(54) **MULTI-BEAM BASED DATA TRANSMISSION METHOD AND DEVICE**

(30) Priority: 14.06.2017 CN 201710448193
(71) Applicant: Vivo Mobile Communication Co., Ltd., Dongguan, Guangdong 523860 (CN)
(72) Inventor: WU, Yumin, Dongguan Guangdong 523860 (CN); SUN, Xiaodong, Dongguan Guangdong 523860 (CN)
(74) Representative: Beck Greener LLP
(86) International application number: PCT/CN2018/090606
(87) International publication number: WO 2018/228319

(57) **Abstract**

A multi-beam-based data transmission method and device are provided. The method includes configuring a first correspondence between one or more uplink beams and one or more downlink beams, and/or configuring a second correspondence relationship between each uplink beam and the uplink physical channel, and transmitting and/or receiving data according to the first correspondence relationship and/or the second correspondence relationship.

## Description

### CROSS-REFERENCE TO RELATED APPLICATION

This application claims priority to a Chinese Patent Application No. 201710448193.0 filed in China on June 14, 2017, the disclosure of which is incorporated herein in its entirety by reference.

### TECHNICAL FIELD

The present disclosure relates to a field of communication technology, and in particular, relates to a multi-beam-based data transmission method and device.

### BACKGROUND

In a Fifth Generation (5G) mobile communication system, a highfrequency communication and a large-scale antenna technology will be introduced in order to achieve targets of a downlink transmission rate of 20 Gbps and an uplink transmission rate of 10 Gbps. The high frequency communication may provide a wider system bandwidth, an antenna size thereof may be smaller, which is more advantageous for deployment of a large-scale antenna in a base station and a User Equipment (UE). Transmission and reception at a base station side through a multi-beam/multi-transmission-reception node (Multi-beam/Multi-TRP) and a multi-beam transmission and reception at the UE side will be widely used.

### SUMMARY

The present disclosure provides a multi-beam-based data processing method and a multi-beam-based data processing device.

In a first aspect, the present disclosure provides a multi-beam-based data transmission method applied to a base station. The method includes configuring first correspondence relationship between one or more uplink beams and one or more downlink beams, and/or configuring second correspondence relationship between each of the one or more uplink beams and an uplink physical channel; transmitting and/or receiving data according to the first correspondence relationship and/or the second correspondence relationship.

In a second aspect, the present disclosure also provides a multi-beam-based data transmission method applied to a user equipment (UE). The method includes receiving a configuration message transmitted by a base station; establishing first correspondence relationship between one or more uplink beams and one or more downlink beams, and/or establishing second correspondence relationship between each of the one or more uplink beams and an uplink physical channel, based on the configuration message; and transmitting and/or receiving data according to the first correspondence relationship and/or the second correspondence relationship.

In a third aspect, the present disclosure further provides a multi-beam-based data transmission method. The method includes configuring correspondence relationship between a Hybrid Automatic Repeat Request (HARQ) entity and a beam; and transmitting and/or receiving data on a HARQ process of the HARQ entity corresponding to the beam according to the correspondence relationship.

In a fourth aspect, the present disclosure also provides a multi-beam-based data transmission method applied to a user equipment (UE). The method includes: receiving a control command transmitted by a network side; and activating data reception or data transmission on an uplink beam or a downlink beam in a case that the control command is a beam activation command, terminating data reception or data transmission on an uplink beam or a downlink beam in a case that the control command is a beam deactivation command.

In a fifth aspect, the present disclosure also provides a multi-beam-based data transmission method applied to a base station. The method includes transmitting a control command to a User Equipment (UE), wherein the control command includes a beam activation command and a beam deactivation command, the beam activation command is configured to activate data reception or data transmission on an uplink beam or a downlink beam, and the beam deactivation command is configured to terminate data reception or data transmission on the uplink beam or the downlink beam.

In a sixth aspect, the present disclosure also provides a multi-beam-based data transmission method applied to a user equipment (UE). The method includes receiving data through a downlink beam corresponding to an uplink beam having an uplink control channel; in a case that reception of the downlink beam fails, indicating a failure indication of Out-of-Sync to a higher layer to a physical layer of the UE.

In a seventh aspect, the present disclosure also provides a base station. The base station includes a first processing module, configured to configure first correspondence relationship between one or more uplink beams and one or more downlink beams, and/or configure second correspondence relationship between each of the one or more uplink beams and an uplink physical channel; and a first transceiving module, configured to transmit and/or receive data according to the first correspondence relationship and/or the second correspondence relationship.

In an eighth aspect, the present disclosure also provides a user equipment (UE). The UE includes a first receiving module, configured to receive a configuration message transmitted by a base station; a second processing module, configured to establish first correspondence relationship between one or more uplink beams and one or more downlink beams, and/or establish second correspondence relationship between each of the one or more uplink beams and an uplink physical channel, based on the configuration message; and a second transceiving module, configured to transmit and/or receiving data according to the first correspondence relationship and/or the second correspondence relationship.

In a ninth aspect, the present disclosure further provides a multi-beam-based data transmission device. The device includes a third processing module, configured to configure correspondence relationship between a Hybrid Automatic Repeat Request (HARQ) entity and a beam; a third transceiving module, configured to transmit and/or receive data on a HARQ process of the HARQ entity corresponding to the beam according to the correspondence relationship.

In a tenth aspect, the present disclosure also provides a user equipment (UE). The UE includes a second receiving module, configured to receive a control command transmitted by a network side; and a fourth processing module, configured to activate data reception or data transmission on an uplink beam or a downlink beam in a case that the control command is a beam activation command and terminate data reception or data transmission on an uplink beam or a downlink beam in a case that the control command is a beam deactivation command.

In an eleventh aspect, the present disclosure also provides a base station. The base station includes a third transmitting module, configured to transmit a control command to a User Equipment (UE), wherein the control command includes a beam activation command and a beam deactivation command, the beam activation command is configured to activate data reception or data transmission on an uplink beam or a downlink beam, and the beam deactivation command is configured to terminate data reception or data transmission on the uplink beam or the downlink beam.

In a twelfth aspect, the present disclosure further provides a user equipment (UE). The UE includes a third receiving module, configured to receive data through a downlink beam corresponding to an uplink beam having an uplink control channel; and a fourth transmitting module, configured to, in a case that reception of the downlink beam fails, indicate a failure indication of Out-of-Sync to a higher layer to a physical layer of the UE.

In a thirteenth aspect, that present disclosure also provides a user equipment. The user equipment includes a storage and a processor, wherein the storage stores a computer program executable by the processor, when the processor executes the computer program, the processor implements steps in the multi-beam-based data transmission method according to the second aspect, the third aspect, the fourth aspect, or the sixth aspect.

In a fourteenth aspect, the present disclosure also provides a base station. The base station includes a storage and a processor, wherein the storage stores a computer program executable by the processor, and when the processor executes the computer program, the processor implements steps in the multi-beam-based data transmission method according to the first aspect, the third aspect, or the fifth aspect.

In a fifteenth aspect, the present disclosure also provides a non-volatile computer readable storage medium, wherein the non-volatile computer readable storage medium includes data and programs stored on the computer readable storage medium, wherein when the data and the program are executed by a processor, the processor implements the steps in the multi-beam-based data transmission method according to any one of the first aspect to the sixth aspect.

### BRIEF DESCRIPTION OF THE DRAWINGS

Various other advantages and benefits will become apparent to those of ordinary skills in the art through reading a detailed description of optional embodiments below. The drawings are used for illustrating optional embodiments only and are not to be construed as limiting the disclosure. Throughout the drawings, like parts are denoted by like reference numerals. In the drawings,
FIG. 1 is a flowchart of a multi-beam data processing method of the present disclosure;
FIG. 2 is another flowchart of the multi-beam data processing method of the present disclosure;
FIG. 3 is another flowchart of the multi-beam data processing method of the present disclosure;
FIG. 4 is another flowchart of the multi-beam data processing method of the present disclosure;
FIG. 5 is another flowchart of the multi-beam data processing method of the present disclosure;
FIG. 6 is another flowchart of the multi-beam data processing method of the present disclosure;
FIG. 7 is another flowchart of the multi-beam data processing method of the present disclosure;
FIG. 8 is a schematic structural diagram of a base station of the present disclosure;
FIG. 9 is a schematic structural diagram of a UE of the present disclosure;
FIG. 10 is a schematic structural diagram of a multi-beam data processing device of the present disclosure;
FIG. 11 is another structural diagram of the UE of the present disclosure;
FIG. 12 is another structural diagram of a base station of the present disclosure;
FIG. 13 is another structural diagram of a base station of the present disclosure;
FIG. 14 is another structural diagram of a base station of the present disclosure
FIG. 15 is another structural diagram of the UE of the present disclosure.

### DETAILED DESCRIPTION

In order to make objectives, technical solutions and advantages of the present disclosure clearer, the technical solutions in the present disclosure will be clearly and completely described below in conjunction with the drawings in the present disclosure. It is apparent that the described embodiments are a part of the embodiments of the present disclosure, rather than all of the embodiments. Based on the embodiments of the present disclosure, all other embodiments obtained by those of ordinary skills in the art without creative work are within the scope of the present disclosure.

Such terms as "include" and "have" and any variations thereof in the specification and claims of the present disclosure are intended to cover a non-exclusive inclusion, for example, a process, a method, a system, a product or a device including a series of steps or units needs not be limited to those steps or units clearly listed, but may include other steps or units not explicitly listed or inherent to these processes, methods, products, or devices.

In the present disclosure, a base station may be a Base Transceiver Station (BTS) in a Global System of Mobile Communication (GSM) or a Code Division Multiple Access (CDMA) technology, or may be a NodeB (NB) in a Wideband Code Division Multiple Access (WCDMA), may also be an Evolutional NodeB (eNB or eNodeB) in a Long Term Evolution (LTE), or may also be a base station in a New radio access technique (New RAT or NR), a relay station or an access point, a base station in a future Fifth Generation (5G) network, etc. The present disclosure is not limited thereto.

In the present disclosure, a User Equipment (UE) may be a wireless terminal or a wired terminal. The UE may be a device that provides voice and/or other service data connectivity to a user, a handheld device with wireless connection functionality, or another processing device connected to a wireless modem. A wireless terminal may communicate with one or more core networks via a Radio Access Network (RAN). A wireless terminal may be a mobile terminal such as a mobile phone (or a "cellular" phone) and a computer having the mobile terminal, for example, a portable mobile device, a pocket-sized mobile device, a handheld mobile device, a computer built-in or on-board mobile device that exchange language and/or data with the Radio Access Network. For example, the wireless terminal may be a Personal Communication Service (PCS) phone, a cordless phone, a Session Initiation Protocol (SIP) phone, a Wireless Local Loop (WLL) station, a Personal Digital Assistant (PDA) device, and the like. The wireless terminal may also be referred to as a system, a Subscriber Unit, a Subscriber Station, a Mobile Station, a Mobile, a Remote Station, a Remote Terminal, an Access Terminal, a User Terminal, a User Agent, a User Equipment or a User Device. The present disclosure is not limited thereto.

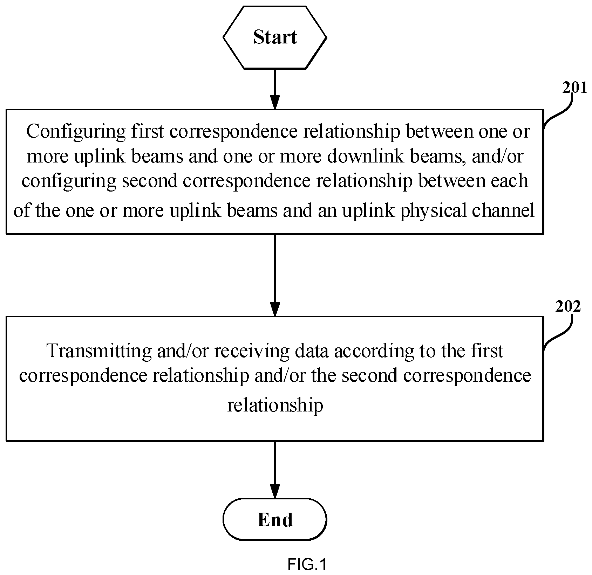

Referring to FIG. 1, FIG.1 shows a flowchart of a multi-beam-based data transmission method of the present disclosure. An execution entity of the method is a base station and includes steps 201-202 as follows.

Step 201: configuring first correspondence relationship between one or more uplink beams and one or more downlink beams, and/or configuring second correspondence relationship between each of the one or more uplink beams and an uplink physical channel.

An uplink beam is a single uplink transmission beam, an uplink transmission beam pair, an uplink transmission beam group, or an uplink transmission beam set. A downlink beam is a single downlink transmission beam, a downlink transmission beam pair, a downlink transmission beam group, or a downlink transmission beam set.

An uplink physical channel includes one or more of a Physical Uplink Shared Channel (PUSCH), a Physical Uplink Control Channel (PUCCH), an uplink sounding channel (Sounding Reference Signal, SRS), and a Physical Random Access Channel (PRACH). Optionally, in step 201, the UE receives data through an uplink physical channel corresponding to the uplink beam according to the second correspondence relationship.

The correspondence relationship between one or more uplink beams and one or more downlink beams, includes any one of the following: correspondence relationship in which one or more downlink beams correspond to one or more uplink beams having an uplink data channel; correspondence relationship in which one or more downlink beams correspond to one or more uplink beams having an uplink control channel; correspondence relationship in which one or more downlink beams correspond to one or more uplink beams having an uplink sounding channel; and correspondence relationship in which one or more downlink beams correspond to one or more uplink beams having a random access channel.

Step 202: transmitting and/or receiving data according to the first correspondence relationship and/or the second correspondence relationship.

In a case that one or more downlink beams correspond to an uplink beam having an uplink data channel, downlink data is transmitted on the one or more downlink beams, and uplink data corresponding to the downlink data is received on the uplink data channel of the uplink beam; or in a case that one or more downlink beams correspond to an uplink beam having an uplink control channel, downlink data is transmitted on the one or more downlink beams, and control information corresponding to the downlink data is received on the uplink control channel of the uplink beam; or in a case that one or more downlink beams correspond to an uplink beam having an uplink sounding channel, downlink data is transmitted on the one or more downlink beams, and a sounding signal corresponding to the downlink data is received on the uplink sounding channel of the uplink beam; or in a case that one or more downlink beams correspond to an uplink beam having an uplink random access channel, downlink data is transmitted on the one or more downlink beams, a random access signal corresponding to the downlink data is received on the random access channel of the uplink beam; or in a case that a downlink beam corresponds to one or more uplink beams having an uplink data channel, uplink data is received on the uplink beam, control information and/or feedback information corresponding to the uplink data are transmitted on a downlink channel of the downlink beam; or in a case that a downlink beam corresponds to one or more uplink beams having an uplink control channel, uplink control information is received on the uplink beam, and downlink data and/or downlink control information corresponding to the uplink control information are transmitted on the downlink beam; or in a case that a downlink beam corresponds to one or more uplink beams having an uplink sounding channel, a sounding signal is received on the uplink beam and downlink data and/or downlink control information corresponding to the sounding signal are transmitted on the downlink beam; or in a case that a downlink beam corresponds to one or more uplink beams having an uplink random access channel, a random access signal is received on the uplink beam, downlink data and/or downlink control information corresponding to the random access signal are transmitted on the downlink beam.

In the present disclosure, by configuring the first correspondence relationship between one or more uplink beams and one or more downlink beams, and configuring the second correspondence relationship between each uplink beam and an uplink physical channel, a plurality of downlink beams corresponds to an uplink beam, and transmission in different types of physical channels is implemented in a plurality of uplink beams.

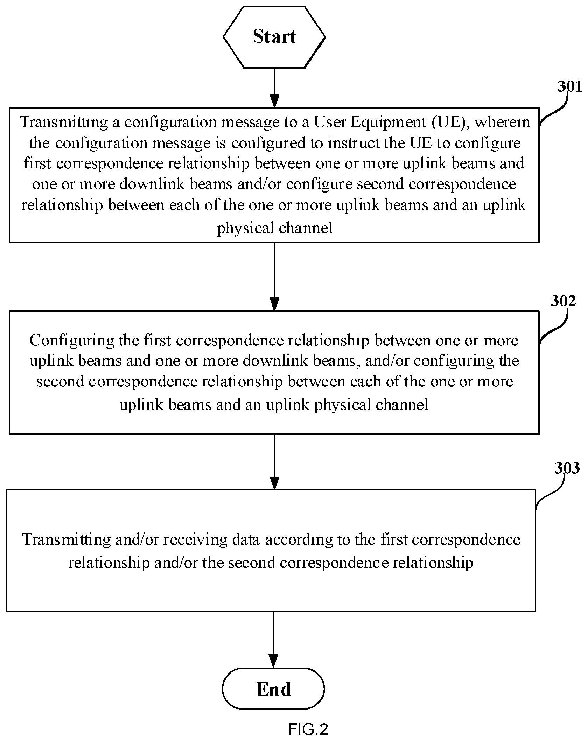

Referring to FIG. 2, FIG. 2 shows another flowchart of a multi-beam-based data transmission method of the present disclosure. An execution entity of the method is a base station and includes steps 301-303 as follow.

Step 301: transmitting a configuration message to a User Equipment (UE), wherein the configuration message is configured to instruct the UE to configure first correspondence relationship between one or more uplink beams and one or more downlink beams and/or configure second correspondence relationship between each of the one or more uplink beams and an uplink physical channel.

An uplink beam is a single uplink transmission beam, an uplink transmission beam pair, an uplink transmission beam group, or an uplink transmission beam set. A downlink beam is a single downlink transmission beam, a downlink transmission beam pair, a downlink transmission beam group, or a downlink transmission beam set.

Step 302: configuring the first correspondence relationship between one or more uplink beams and one or more downlink beams, and/or configuring the second correspondence relationship between each of the one or more uplink beams and an uplink physical channel.

It should be noted that a specific sequence of the step 301 and the step 302 is not limited in the present disclosure, the step 301 and the step 302 may be performed concurrently, or the step 302 may be performed before the step 301.

Step 303: transmitting and/or receiving data according to the first correspondence relationship and/or the second correspondence relationship.

The above step 302 is the same as the step 201, and the above step 303 is the same as the step 202, which are not repeatedly described herein.

In the present disclosure, by configuring the first correspondence relationship between one or more uplink beams and one or more downlink beams, and configuring the second correspondence relationship between each uplink beam and an uplink physical channel, a plurality of downlink beams corresponds to an uplink beam, and transmission in different types of physical channels is implemented in a plurality of uplink beams.

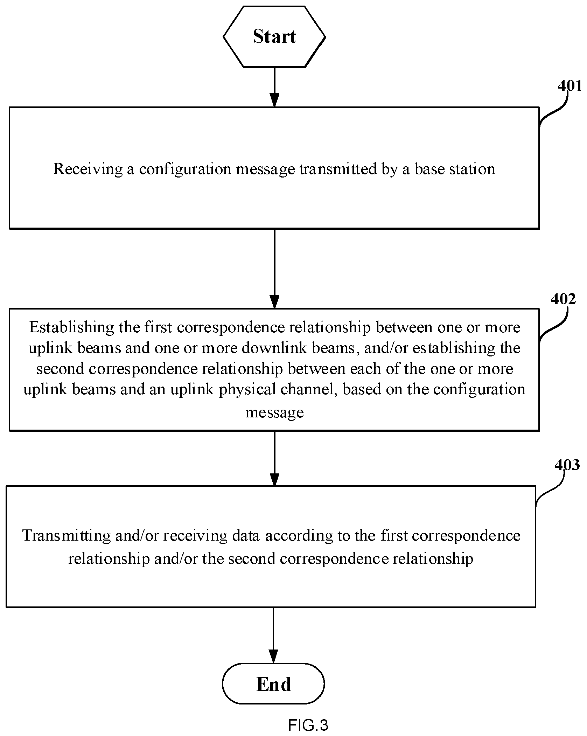

Referring to FIG. 3, FIG. 3 shows another flowchart of a multi-beam-based data transmission method of the present disclosure. An execution entity of the method is a UE and includes steps 401-403 as follow.

Step 401: receiving a configuration message transmitted by a base station, wherein the configuration message is configured to instruct the UE to configure first correspondence relationship between one or more uplink beams and one or more downlink beams and/or configure second correspondence relationship between each of the one or more uplink beams and an uplink physical channel.

Step 402: establishing the first correspondence relationship between one or more uplink beams and one or more downlink beams, and/or establishing the second correspondence relationship between each of the one or more uplink beams and an uplink physical channel, based on the configuration message.

An uplink beam is a single uplink transmission beam, an uplink transmission beam pair, an uplink transmission beam group, or an uplink transmission beam set. A downlink beam is a single downlink transmission beam, a downlink transmission beam pair, a downlink transmission beam group, or a downlink transmission beam set.

Optionally, the uplink physical channel includes one or more of an uplink data channel, an uplink control channel, an uplink sounding channel, and a random access channel.

Optionally, the correspondence relationship between one or more uplink beams and one or more downlink beams includes any one of the following: correspondence relationship in which one or more downlink beams correspond to one or more uplink beams having an uplink data channel; correspondence relationship in which one or more downlink beams correspond to one or more uplink beams having an uplink control channel; correspondence relationship in which one or more downlink beams correspond to one or more uplink beams having an uplink sounding channel; and correspondence relationship in which one or more downlink beams correspond to one or more uplink beams having a random access channel.

Step 403: transmitting and/or receiving data according to the first correspondence relationship and/or the second correspondence relationship.

For example, data is transmitted through an uplink physical channel corresponding to the uplink beam according to the second correspondence relationship.

In the present disclosure, in a case that one or more downlink beams correspond to an uplink beam having an uplink data channel, downlink data is received on the downlink beam, and uplink data corresponding to the downlink data is transmitted on the uplink data channel of the uplink beam; or in a case that one or more downlink beams correspond to an uplink beam having an uplink control channel, downlink data is received on the downlink beam, and control information corresponding to the downlink data is transmitted on the uplink control channel of the uplink beam; or in a case that one or more downlink beams correspond to an uplink beam having an uplink sounding channel, downlink data is received on the downlink beam, and a sounding signal corresponding to the downlink data is transmitted on the uplink sounding channel of the uplink beam; or in a case that one or more downlink beams correspond to an uplink beam having an uplink random access channel, downlink data is received on the downlink beam, a random access signal corresponding to the downlink data is transmitted on the random access channel of the uplink beam; or in a case that a downlink beam corresponds to one or more uplink beams having an uplink data channel, uplink data is received on the uplink beam, control information and/or feedback information corresponding to the uplink data are received on a downlink channel of the downlink beam; or in a case that a downlink beam corresponds to one or more uplink beams having an uplink control channel, uplink control information is transmitted on the uplink beam, and downlink data and/or downlink control information corresponding to the uplink control information are received on the downlink beam; or in a case that a downlink beam corresponds to one or more uplink beams having an uplink sounding channel, a sounding signal is transmitted on the uplink beam and downlink data and/or downlink control information corresponding to the sounding signal are received on the downlink beam; or in a case that a downlink beam corresponds to one or more uplink beams having an uplink random access channel, a random access signal is transmitted on the uplink beam, downlink data and/or downlink control information corresponding to the random access signal are received on the downlink beam.

In the present disclosure, by configuring the first correspondence relationship between one or more uplink beams and one or more downlink beams, and configuring the second correspondence relationship between each uplink beam and an uplink physical channel, a plurality of downlink beams corresponds to an uplink beam, and transmission in different types of physical channels is implemented in a plurality of uplink beams.

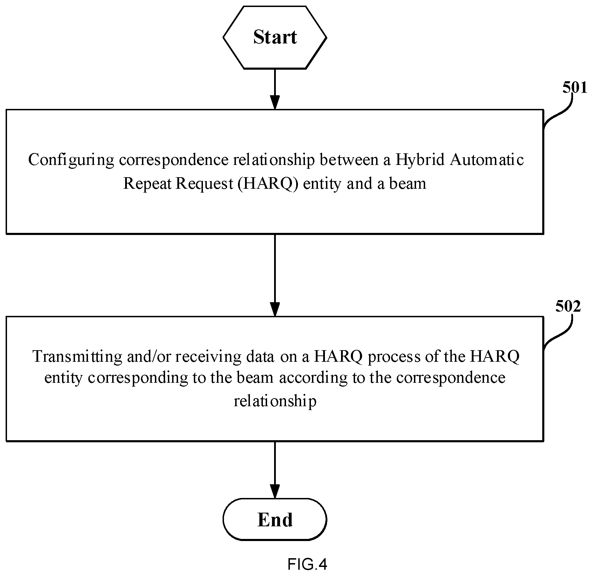

Referring to FIG. 4, FIG. 4 shows another flowchart of the multi-beam-based data transmission method of the present disclosure. An execution entity of the method may be a UE or a base station and the method includes steps 501-502.

Step 501: configuring correspondence relationship between a Hybrid Automatic Repeat Request (HARQ) entity and a beam.

Optionally, the correspondence relationship between the HARQ entity and the beam includes any one of the following: correspondence relationship in which a HARQ entity corresponds to a uplink-downlink beam pair; correspondence relationship in which a HARQ entity corresponds to a uplink beam; correspondence relationship in which a HARQ entity corresponds to a downlink beam; correspondence relationship in which a HARQ entity corresponds to a group of uplink-downlink beam pairs; correspondence relationship in which a HARQ entity corresponds to a group of downlink beams; and correspondence relationship in which a HARQ entity corresponds to a group of uplink beams.

The group of uplink-downlink beam pairs includes at least one PUCCH uplink beam.

Step 502: transmitting and/or receiving data on a HARQ process of the HARQ entity corresponding to the beam according to the correspondence relationship.

In the present disclosure, the correspondence relationship between the HARQ entity and the beam is configured such that data is transmitted and received by different beams of the UE or the base station on a corresponding HARQ entity, the number of HARQ processes of the UE or the base station is added, and a transmission rate or a reception rate of the UE or the base station is improved.

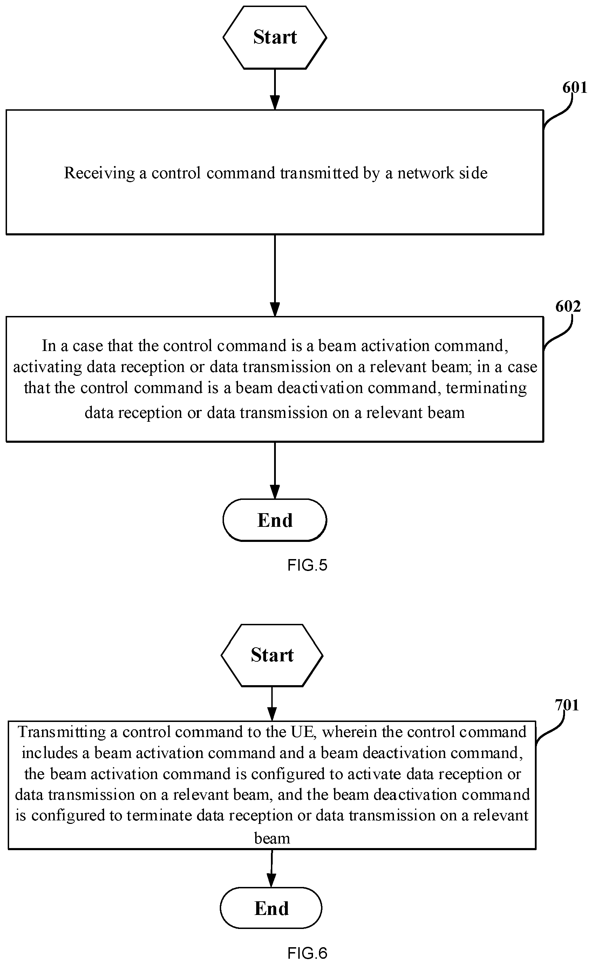

Referring to FIG. 5, FIG. 5 shows another flowchart of the multi-beam-based data transmission method of the present disclosure. An execution entity of the method is a UE and includes steps 601-602.

Step 601: receiving a control command transmitted by a network side.

An uplink beam is a single uplink transmission beam, an uplink transmission beam pair, an uplink transmission beam group, or an uplink transmission beam set. A downlink beam is a single downlink transmission beam, a downlink transmission beam pair, a downlink transmission beam group, or a downlink transmission beam set.

Optionally, relevant configuration information of an uplink beam activation command or a downlink beam activation command includes a beam identifier and/or a duration of an activation timer.

Optionally, relevant configuration information of an uplink beam deactivation command or a downlink beam deactivation command includes a beam identifier and/or a duration of a deactivation timer.

Step 602: in a case that the control command is a beam activation command, activating data reception or data transmission on a relevant beam; in a case that the control command is a beam deactivation command, terminating data reception or data transmission on a relevant beam.

For example, the beam activation command includes a beam identifier.

In step 602, data reception or data transmission on a beam corresponding to the beam identifier is activated according to the beam identifier in the beam activation command.

For example, the beam deactivation command includes a beam identifier.

In step 602, data reception or data transmission on a beam corresponding to the beam identifier is terminated according to the beam identifier in the beam deactivation command.

For example, the beam activation command includes a duration of an uplink activation timer or a downlink activation timer.

In step 602, data reception or data transmission on the beam corresponding to the uplink activation timer or the downlink activation timer is activated according to the duration of the uplink activation timer or the downlink activation timer in the beam activation command.

For example, the beam deactivation command includes a duration of an uplink deactivation timer or a downlink deactivation timer.

In step 602, data reception or data transmission on the beam corresponding to the uplink deactivation timer or the downlink deactivation timer is terminated according to the duration of the uplink deactivation timer or the downlink deactivation timer in the beam deactivation command.

For example, the beam activation command includes a downlink beam activation command.

In step 602, reception through a downlink data channel is activated according to the downlink beam activation command, or reception through a downlink control channel is activated according to the downlink beam activation command.

Optionally, the method of FIG. 5 further includes starting a downlink deactivation timer in a case that the downlink activation timer times out, or that a downlink beam deactivation command is received, or that the downlink beam activation command is received.

For example, the beam activation command includes a downlink beam deactivation command.

In step 602, reception through a downlink data channel is terminated according to the downlink beam deactivation command, or reception through a downlink control channel is terminated according to the downlink beam deactivation command.

Optionally, the method further includes: starting a downlink activation timer in a case that a downlink deactivation timer times out, or that a downlink beam activation command is received, or that a downlink beam deactivation command is received.

For example, the beam activation command includes an uplink beam activation command.

In step 602, transmission through an uplink data channel is activated according to an uplink beam activation command; or transmission through an uplink control channel is activated according to the uplink beam activation command; or transmission through an uplink sounding channel is activated according to the uplink beam activation command; or transmission of an uplink status report is activated according to the uplink beam activation command; or transmission through an uplink random access channel is activated according to the uplink beam activation command.

Optionally, the method further includes starting an uplink activation timer in a case that an uplink activation timer times out, or that an uplink beam deactivation command is received, or that an uplink beam activation command is received.

For example, the beam activation command includes an uplink beam deactivation command.

In step 602, transmission through an uplink data channel is terminated according to the uplink beam deactivation command; or transmission through an uplink control channel is terminated according to the uplink beam deactivation command; or transmission through an uplink sounding channel is terminated according to the uplink beam deactivation command; or transmission of an uplink status report is terminated according to the uplink beam deactivation command; or transmission through an uplink random access channel is terminated according to the uplink beam deactivation command.

Optionally, the method further includes starting an uplink deactivation timer in a case that an uplink deactivation timer times out, or that an uplink beam activation command is received, or that an uplink beam deactivation command is received.

In the present disclosure, a network side transmits a control command for activating or deactivating an uplink beam or a downlink beam currently available to the UE, thereby saving a loss of the UE and a resource of the network side.

Referring to FIG. 6, FIG. 6 shows another flowchart of a multi-beam-based data transmission method of the present disclosure. An execution entity of the method is a base station and includes a step 701.

Step 701: transmitting a control command to the UE, wherein the control command includes a beam activation command and a beam deactivation command, the beam activation command is configured to activate data reception or data transmission on a relevant beam, and the beam deactivation command is configured to terminate data reception or data transmission on a relevant beam.

An uplink beam is a single uplink transmission beam, an uplink transmission beam pair, an uplink transmission beam group, or an uplink transmission beam set. A downlink beam is a single downlink transmission beam, a downlink transmission beam pair, a downlink transmission beam group, or a downlink transmission beam set.

Optionally, the beam activation command includes a beam identifier and/or a duration of an activation timer.

Optionally, the beam deactivation command includes a beam identifier and/or a duration of a deactivation timer.

In the present disclosure, in a case that the UE is configured with a plurality of uplink beams having an uplink control channel (PUCCH) and reception on a downlink beam corresponding to an uplink beam of the uplink control channel fails, it may be judged that transmission on the uplink beam also may also fail, and a physical layer of the UE indicates an Out-of-Sync to a higher layer, and then the UE retransmits data transmitted on the uplink beam in time, thereby ensuring reliability of data transmission.

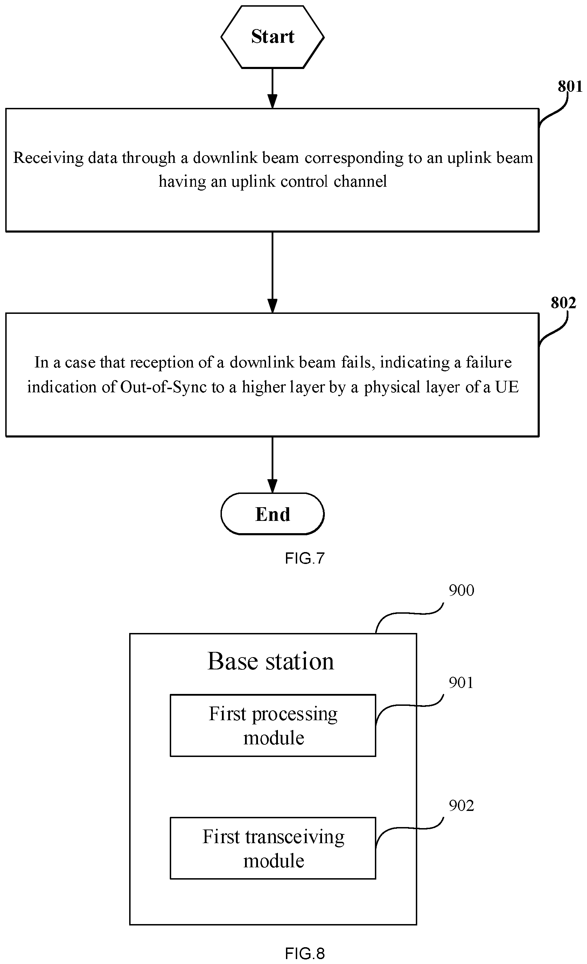

Referring to FIG. 7, FIG. 7 shows another flowchart of the multi-beam-based data transmission method of the present disclosure. An execution entirety of the method is a UE and includes steps 801-802.

Step 801: receiving data through a downlink beam corresponding to an uplink beam having an uplink control channel.

Step 802: in a case that reception of a downlink beam fails, indicating a failure indication of Out-of-Sync to a higher layer by a physical layer of the UE.

An uplink beam is a single uplink transmission beam, an uplink transmission beam pair, an uplink transmission beam group, or an uplink transmission beam set. A downlink beam is a single downlink transmission beam, a downlink transmission beam pair, a downlink transmission beam group, or a downlink transmission beam set.

Optionally, failure of the reception of the downlink beam corresponding to the uplink beam having the uplink control channel includes any one of the following: failure of reception of a downlink beam corresponding to an uplink beam having an uplink control channel; failure of the reception of the downlink beam corresponding to the uplink beam having the uplink control channel and failure of an uplink beam recovery corresponding to an uplink beam failure; failure of reception of downlink beams corresponding to all uplink beams having an uplink control channel; and failure of the reception of downlink beams corresponding to all uplink beams having an uplink control channel, and failure of uplink beam recovery corresponding to all uplink beam failures.

In the present disclosure, in a case that the UE is configured with a plurality of uplink beams having an uplink control channel (PUCCH) and reception on a downlink beam corresponding to an uplink beam of the uplink control channel fails, it may be judged that transmission on the uplink beam also may also fail, and a physical layer of the UE indicates an Out-of-Sync to a higher layer, and then the UE retransmits data transmitted on the uplink beam in time, thereby ensuring reliability of data transmission.

The present disclosure provides following examples of the multi-beam-based data transmission method.

### Example 1: A network side configures multi-beam association relationship

Step 1: transmitting a configuration message to a UE by the network side, for configuring a correspondence relationship between one or more uplink beams and one or more downlink beams and an uplink physical channel which may be transmitted by each uplink beam.

The uplink physical channel that may be transmitted by each uplink beam are any combination of following physical channels: an uplink data channel (Physical Uplink Shared Channel, PUSCH), an uplink control channel (Physical Uplink Control Channel, PUCCH), an uplink sounding channel (Sounding Reference Signal, SRS), and a random access channel (Physical Random Access Channel, PRACH).

The correspondence relationship between one or more uplink beams and one or more downlink beams, includes: correspondence relationship in which one or more downlink beams correspond to one or more uplink beams having an uplink data channel; correspondence relationship in which one or more downlink beams correspond to one or more uplink beams having an uplink control channel; correspondence relationship in which one or more downlink beams correspond to one or more uplink beams having an uplink sounding channel; and correspondence relationship in which one or more downlink beams correspond to one or more uplink beams having a random access channel.

Step 2: establishing the correspondence relationship between one or more uplink beams and one or more downlink beams according to the configuration by the network side and the UE side.

Step 3: receiving, by the network side, a corresponding physical channel according to the uplink physical channel that may be transmitted by each configured uplink beam; or transmitting, by the UE side, the corresponding physical channel according to the uplink physical channel that may be transmitted by each configured uplink beam.

In particular, a step 3.1: transmitting and/or receiving data by the UE according to the correspondence relationship between an uplink beam and a downlink beam; in a case that one or more downlink beams correspond to an uplink beam having an uplink data channel, the UE, in relation to data reception by the one or more downlink beams, transmits data (such as uplink data transmission corresponding to downlink data reception) on the uplink data channel of the uplink beam.

In a case that one or more downlink beams correspond to an uplink beam having an uplink control channel, the UE, in relation to data reception by the one or more downlink beam, transmits control information (such as uplink feedback information corresponding to downlink data transmission) on the uplink control channel of the uplink beam.

In a case that one or more downlink beams correspond to an uplink beam having an uplink sounding channel, the UE, in relation to data reception by the one or more downlink beams, transmits a sounding signal (such as an uplink sounding signal corresponding to downlink data transmission) on the uplink sounding channel of the uplink beam.

In a case that one or more downlink beams correspond to an uplink beam having an uplink random access channel, UE, in relation to data reception by the one or more downlink beams, transmits a random access signal (such as an uplink random access signal corresponding to downlink data transmission) on the random access channel of the uplink beam.

In a case that a downlink beam correspond to one or more uplink beams have an uplink data channel, the UE, in relation to data transmission by the one or more uplink beams, receives control and feedback information (such as schedule information and feedback of whether reception is successful or not) on a downlink channel of the downlink beam.

In a case that a downlink beam corresponds to one or more uplink beams having an uplink control channel, the UE, in relation to transmission of control information by the one or more uplink beams, receives corresponding control and feedback information on the downlink beam (such as downlink control information indicates on which uplink beam the transmission of uplink feedback information is performed).

In a case that a downlink beam corresponds to one or more uplink beams having an uplink sounding channel, the UE, in relation to transmission of a sounding signal by the one or more uplink beams, receives data and control information (such as downlink control information indicates on which uplink beam the transmission of the sounding signal is performed) on the downlink beam.

In a case that a downlink beam corresponds to one or more uplink beams having an uplink random access channel, the UE, in relation to transmission of a random access signal by the one or more uplink beams, receives data and control information (such as downlink control information indicates on which uplink beam the random access signal is transmitted) on the downlink beam.

Step 3.2: transmitting and/or receiving data according to the correspondence relationship between an uplink beam and a downlink beam.

In a case that one or more downlink beams correspond to an uplink beam having an uplink data channel, the network side, in relation to data transmission on one or more downlink beams, receives data (such as uplink data reception corresponding to downlink data transmission) on the uplink data channel of the uplink beam.

In a case that one or more downlink beams correspond to an uplink beam having an uplink control channel, the network side, in relation to data transmission on the one or more downlink beams, receives control information (such as uplink feedback information corresponding to downlink data transmission) on the uplink control channel of the uplink beam.

In a case that one or more downlink beams correspond to an uplink beam having an uplink sounding channel, the network side, in relation to data transmission on the one or more downlink beams, receives a sounding signal (such as an uplink sounding signal corresponding to downlink data transmission) on the uplink sounding channel of the uplink beam.

In a case that one or more downlink beams correspond to an uplink beam having an uplink random access channel, the network side, in relation to data transmission on the one or more downlink beams, receives a random access signal (such as an uplink random access signal corresponding to downlink data transmission) on the random access channel of the uplink beam.

In a case that a downlink beam corresponds to one or more uplink beams having an uplink data channel, the network side, in relation to data reception on the one or more uplink beams, transmits control and feedback information (such as scheduling information and feedback of whether reception has been successful or not) a downlink channel of the downlink beam.

In a case that a downlink beam corresponds to one or more uplink beams having an uplink control channel, the network side, in relation to reception of control information on the one or more uplink beams, transmits data and control information (such as downlink control information indicates on which uplink beam the transmission of uplink feedback information is performed) on the downlink beam.

In a case that a downlink beam corresponds to one or more uplink beams having an uplink sounding channel, the network side, in relation to reception of a sounding signal on the one or more uplink beams, transmits corresponding data and control information (such as downlink control information indicates on which uplink beam the transmission of the sounding signal is performed) on the downlink beam.

In a case that a downlink beam corresponds to one or more uplink beams have an uplink random access channel, the network side, in relation to reception of a random access signal on the one or more uplink beams, transmits corresponding data and control information (such as downlink control information indicates on which uplink beam the random access signal is transmitted) on the downlink beam.

### Example 2: The network side configures correspondence relationship between a HARQ entity and a beam

Step 1: configuring the correspondence relationship between the HARQ entity and the beam according to configuration from the network side and/or a protocol agreement.

The correspondence relationship between the HARQ entity and the beam includes one or more of following: correspondence relationship in which a HARQ entity corresponds to an uplink-downlink beam pair; correspondence relationship in which a HARQ entity corresponds to an uplink beam; correspondence relationship in which a HARQ entity corresponds to a group (i.e., a plurality) of uplink-downlink beam pairs; correspondence relationship in which a HARQ entity corresponds to a group (i.e., a plurality) of downlink beams; correspondence relationship in which a HARQ entity corresponds to a group (i.e., a plurality) of uplink beams; wherein in the correspondence relationship in which a HARQ entity corresponds to a group (i.e., a plurality) of uplink-downlink-beam pairs , the group is a plurality of downlink beams or a plurality of uplink beams including at least one uplink beam including a PUCCH.

### Example 3: Beam activation and deactivation

Step 1; transmitting, by the network side, a control command for activating or deactivating an uplink or downlink beam currently available to the UE, wherein the control command includes one or more of an uplink beam activation command, a downlink beam activation command, an uplink beam deactivation command, and a downlink beam deactivation command.

Configuration information related to the beam activation command includes one or more of a beam identifier and an activation duration.

Configuration information related to the beam deactivation command includes one or more of a beam identifier and a deactivation duration.

Step 2: after the UE side receives the activation command or the deactivation command, resuming or suspends data transmission and/or data reception of a relevant beam.

It should be noted that, in the present disclosure, the HARQ feedback corresponding to the activation command or the deactivation command is not stopped.

In the present disclosure, a behavior of the UE after the UE receives the downlink beam activation command or after a deactivation timer times out includes any of the following: activating a reception of a downlink data channel, activating reception of a downlink control channel, and starting the deactivation timer (in a case that the network configures an activation timer).

In the present disclosure, a behavior of the UE after the UE receives the downlink beam deactivation command or the activation timer times out includes any of the following: stopping the reception of the downlink data channel, stopping the reception of the downlink control channel, and starting an activation timer (in a case that the network configures the deactivation timer).

In the present disclosure, a behavior of the UE after the UE receives the uplink beam activation command or the deactivation timer times out includes any of the following: activating transmission of an uplink data channel, activating transmission of an uplink control channel, activating transmission of an uplink sounding channel, activating transmission of an uplink status report, activating transmission of an uplink random access channel, and initiating the deactivation timer (in a case that the network configures the activation timer).

In the present disclosure, a behavior of the UE after the UE receives the uplink beam deactivation command or the activation timer times out includes any of the following: stopping transmission of an uplink data channel, stopping transmission of an uplink control channel, stopping transmission of an uplink sounding channel, stopping transmission of an uplink status report, stopping transmission of an uplink random access channel, and starting the activation timer (in a case that the network configures the activation timer).

### Example 4: Asynchronous indication

Step 1: in a case that the UE configures a plurality of uplink beams having an uplink control channel (PUCCH), and in a case that a downlink beam reception corresponding to an uplink beam having the uplink control channel fails, judging, by the UE, that an uplink beam transmission will also fail, and indicating, by a physical layer of the UE to a higher layer, an Out-of-Sync indication, wherein a triggering condition of the Out-of-Sync indication includes: a condition in which reception on a downlink beam corresponding to an uplink beam having an uplink control channel fails; a condition in which reception on a downlink beam corresponding to an uplink beam having an uplink control channel fails and an uplink beam recovery corresponding to an uplink beam failure fails; a condition that reception of downlink beams corresponding to all uplink beams having an uplink control channel fails; and reception of downlink beams corresponding to all uplink beams having an uplink control channel fails and a uplink beam recovery corresponding to all uplink beam failures fails.

Based on the same inventive concept, a base station is also provided in the present disclosure. Since the principle of solving a problem by the base station is similar to that of the multi-beam data processing method in the present disclosure, an implementation of the base station may be obtained by referring to the implementation of the method, and repeated description of the implementation will not be given again.

Referring to FIG. 8, FIG. 8 shows a structural diagram of a base station of the present disclosure. The base station 900 includes a first processing module 901 and a first transceiving module 902.

The first processing module 901 is configured to configure first correspondence relationship between one or more uplink beams and one or more downlink beams, and/or configure second correspondence relationship between each of the one or more uplink beams and an uplink physical channel, wherein the one or more uplink beams are a single uplink transmission beam, an uplink transmission beam pair, an uplink transmission beam group, or an uplink transmission beam set, the one or more downlink beams are a single downlink transmission beam, a downlink transmission beam pair, a downlink transmission beam group, or a downlink transmission beam set.

The first transceiving module 902 is configured to transmit and/or receive data according to the first correspondence relationship and/or the second correspondence relationship.

Optionally, the first transceiving module 902 is further configured to transmit a configuration message to a User Equipment (UE), wherein the configuration message is configured to instruct the UE to configure the first correspondence relationship between one or more uplink beams and one or more downlink beams and/or configure the second correspondence relationship between each of the one or more uplink beams and an uplink physical channel.

Optionally, the uplink physical channel includes one or more of an uplink data channel, an uplink control channel, an uplink sounding channel, and a random access channel.

The first transceiving module 902 is further configured to receive data through an uplink physical channel corresponding to each of the one or more uplink beams according to the second correspondence relationship.

Optionally, the correspondence relationship between one or more uplink beams and one or more downlink beams, includes any one of the following: correspondence relationship in which one or more downlink beams correspond to one or more uplink beams having an uplink data channel; correspondence relationship in which one or more downlink beams correspond to one or more uplink beams having an uplink control channel; correspondence relationship in which one or more downlink beams correspond to one or more uplink beams having an uplink sounding channel; and correspondence relationship in which one or more downlink beams correspond to one or more uplink beams having a random access channel.

Optionally, the first transceiving module 902 is further configured to: in a case that one or more downlink beams correspond to an uplink beam having an uplink data channel, transmit downlink data on the downlink beam, and receive uplink data corresponding to the downlink data on the uplink data channel of the uplink beam; or in a case that one or more downlink beams correspond to an uplink beam having an uplink control channel, transmit downlink data on the downlink beam, and receive control information corresponding to the downlink data on the uplink control channel of the uplink beam; or in a case that one or more downlink beams correspond to an uplink beam having an uplink sounding channel, transmit downlink data on the downlink beam, and receive a sounding signal corresponding to the downlink data on the uplink sounding channel of the uplink beam; or in a case that one or more downlink beams correspond to an uplink beam having an uplink random access channel, transmit downlink data on the downlink beam, receive a random access signal corresponding to the downlink data on the random access channel of the uplink beam; or in a case that a downlink beam corresponds to one or more uplink beams having an uplink data channel, receive uplink data on the uplink beam, and transmit control information and/or feedback information corresponding to the uplink data on a downlink channel of the downlink beam; or in a case that a downlink beam corresponds to one or more uplink beams having an uplink control channel, receive uplink control information on the uplink beam, and transmit downlink data and/or downlink control information corresponding to the uplink control information on the downlink beam; or in a case that a downlink beam corresponds to one or more uplink beams having an uplink sounding channel, receive a sounding signal on the uplink beam, and transmit downlink data and/or downlink control information corresponding to the sounding signal on the downlink beam; or in a case that a downlink beam corresponds to one or more uplink beams having an uplink random access channel, receive a random access signal on the uplink beam, transmit downlink data and/or downlink control information corresponding to the random access signal on the downlink beam.

The base station provided by the present disclosure may perform the above-described method embodiments. Implementation principles and technical effects of the base station are similar to those of the method, and will not be repeated herein again.

Based on the same inventive concept, a UE is also provided in the present disclosure. Since the principle of solving a problem by the UE is similar to that of the multi-beam data processing method in the present disclosure, an implementation of the UE may be obtained by referring to the implementation of the method, and repeated description of the implementation will not be given again.

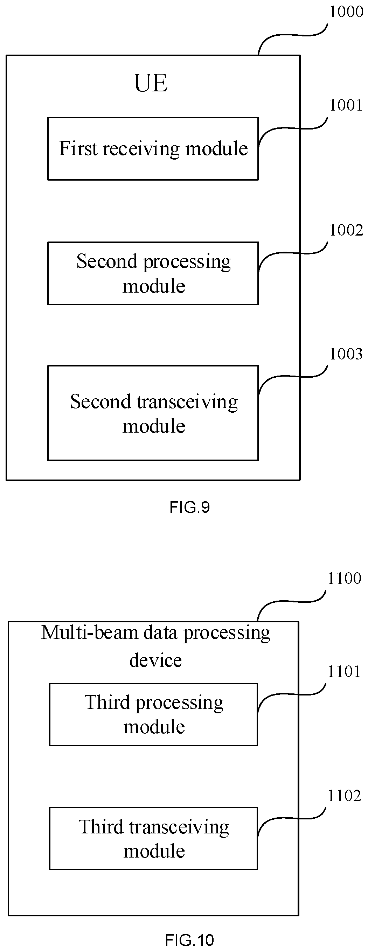

Referring to FIG. 9, FIG.9 shows a structural diagram of a UE of the present disclosure. The UE includes a first receiving module 1001, a second processing module 1002, and a second transceiving module 1003.

The first receiving module 1001 is configured to receive a configuration message transmitted by a base station.

The second processing module 1002 is configured to establish the first correspondence relationship between one or more uplink beams and one or more downlink beams, and/or establish the second correspondence relationship between each of the one or more uplink beams and an uplink physical channel, based on the configuration message.

The second transceiving module 1003 is configured to transmit and/or receive data according to the first correspondence relationship and/or the second correspondence relationship.

Optionally, the uplink physical channel includes one or more of an uplink data channel, an uplink control channel, an uplink sounding channel, and a random access channel. The second transceiving module 1003 is further configured to transmit, according to the second correspondence relationship, data through an uplink physical channel corresponding to the uplink beam.

Optionally, the correspondence relationship between one or more uplink beams and one or more downlink beams, includes any one of the following: correspondence relationship in which one or more downlink beams correspond to one or more uplink beams having an uplink data channel; correspondence relationship in which one or more downlink beams correspond to one or more uplink beams having an uplink control channel; correspondence relationship in which one or more downlink beams correspond to one or more uplink beams having an uplink sounding channel; and correspondence relationship in which one or more downlink beams correspond to one or more uplink beams having a random access channel.

Optionally, the second transceiving module 1003 is further configured to: in a case that one or more downlink beams correspond to an uplink beam having an uplink data channel, receive downlink data on the downlink beam, and transmit uplink data corresponding to the downlink data on the uplink data channel of the uplink beam; or in a case that one or more downlink beams correspond to an uplink beam having an uplink control channel, receive downlink data on the downlink beam, and transmit control information corresponding to the downlink data on the uplink control channel of the uplink beam; or in a case that one or more downlink beams correspond to an uplink beam having an uplink sounding channel, receive downlink data on the downlink beam, and transmit a sounding signal corresponding to the downlink data on the uplink sounding channel of the uplink beam; or in a case that one or more downlink beams correspond to an uplink beam having an uplink random access channel, receive downlink data on the downlink beam, transmit a random access signal corresponding to the downlink data on the random access channel of the uplink beam; or in a case that a downlink beam corresponds to one or more uplink beams having an uplink data channel, transmit uplink data on the uplink beam, and receive control information and/or feedback information corresponding to the uplink data on a downlink channel of the downlink beam; or in a case that a downlink beam corresponds to one or more uplink beams having an uplink control channel, transmit uplink control information on the uplink beam, and receive downlink data and/or downlink control information corresponding to the uplink control information on the downlink beam; or in a case that a downlink beam corresponds to one or more uplink beams having an uplink sounding channel, transmit a sounding signal on the uplink beam, receive downlink data and/or downlink control information corresponding to the sounding signal on the downlink beam; or in a case that a downlink beam corresponds to one or more uplink beams having an uplink random access channel, transmit a random access signal on the uplink beam, receive downlink data and/or downlink control information corresponding to the random access signal on the downlink beam.

The UE provided by the present disclosure may perform the above-described method embodiments. Implementation principles and technical effects of the UE are similar to those of the method, and will not be repeated herein again.

Based on the same inventive concept, a UE is also provided in the present disclosure. Since the principle of solving a problem by the UE is similar to that of the multi-beam data processing method in the present disclosure, an implementation of the UE may be obtained by referring to the implementation of the method, and repeated description of the implementation will not be given again.

Referring to FIG. 10, FIG. 10 shows a structural diagram of a multi-beam data processing device of the present disclosure. The device 1100 includes a third processing module 1101 and a third transceiving module 1102.

The third processing module 1101 is configured to configure correspondence relationship between a Hybrid Automatic Repeat Request (HARQ) entity and a beam.

The third transceiving module 1102 is configured to transmit and/or receive data on a HARQ process of the HARQ entity corresponding to the beam according to the correspondence relationship.

Optionally, the correspondence relationship between the HARQ entity and the beam includes any one of the following: correspondence relationship in which a HARQ entity corresponds to an uplink-downlink beam pair; correspondence relationship in which a HARQ entity corresponds to an uplink beam; correspondence relationship in which a HARQ entity corresponds to a downlink beam; correspondence relationship in which a HARQ entity corresponds to a group of uplink-downlink beam pairs; correspondence relationship in which a HARQ entity corresponds to a group of downlink beams; and correspondence relationship in which a HARQ entity corresponds to a group of uplink beams.

Optionally, the group of uplink-downlink beam pairs includes at least one PUCCH uplink beam.

It should be noted that the multi-beam data processing device may be a transmission end or a reception end.

The multi-beam data processing device provided by the present disclosure may perform the above-described method embodiments. Implementation principles and technical effects of the multi-beam data processing device are similar to those of the method, and will not be repeated herein again.

Based on the same inventive concept, a UE is also provided in the present disclosure. Since the principle of solving a problem by the UE is similar to that of the multi-beam data processing method in the present disclosure, an implementation of the UE may be obtained by referring to the implementation of the method, and repeated description of the implementation will not be given again.

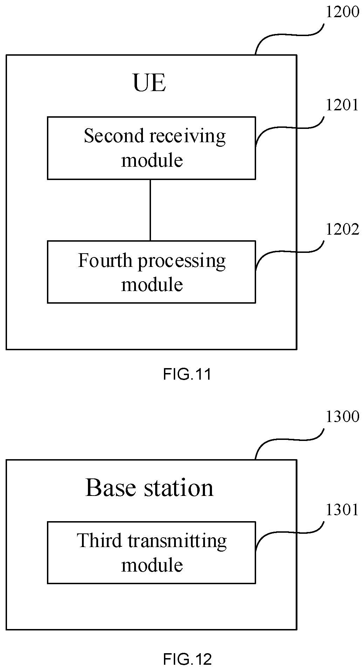

Referring to FIG. 11, FIG. 11 shows another structural diagram of a UE of the present disclosure. The UE 1200 includes a second receiving module 1201 and a fourth processing module 1202.

The second receiving module 1201 is configured to receive a control command transmitted by a network side.

The fourth processing module 1202 is configured to: in a case that the control command is a beam activation command, activating data reception or data transmission on a relevant beam; in a case that the control command is a beam deactivation command, terminating data reception or data transmission on a relevant beam.

Optionally, the beam activation command includes a beam identifier.

The fourth processing module 1202 is further configured to activate data reception or data transmission on a beam corresponding to the beam identifier according to the beam identifier in the beam activation command.

The beam deactivation command includes a beam identifier.

The fourth processing module 1202 is further configured to terminate data reception or data transmission on a beam corresponding to the beam identifier according to the beam identifier in the beam deactivation command.

Optionally, the beam activation command includes a duration of an uplink activation timer or a downlink activation timer.

The fourth processing module 1202 is further configured to activate data reception or data transmission on a beam corresponding to the uplink activation timer or the downlink activation timer according to the duration of the uplink activation timer or the downlink activation timer in the beam activation command.

The beam deactivation command includes a duration of an uplink deactivation timer or a downlink deactivation timer.

The fourth processing module 1202 is further configured to terminate data reception or data transmission on a beam corresponding to the uplink deactivation timer or the downlink deactivation timer according to the duration of the uplink deactivation timer or the downlink deactivation timer in the beam deactivation command.

Optionally, the beam activation command includes a downlink beam activation command.

The fourth processing module 1202 is further configured to activate reception through a downlink data channel according to the downlink beam activation command, or activate reception through a downlink control channel according to the downlink beam activation command.

Optionally, the fourth processing module 1202 is further configured to: start a downlink deactivation timer in a case that the downlink activation timer times out, or that a downlink beam deactivation command is received, or that a downlink beam activation command is received.

Optionally, the beam activation command includes a downlink beam deactivation command.

The fourth processing module 1202 is further configured to terminate reception through a downlink data channel according to the downlink beam deactivation command, or terminate reception through a downlink control channel according to the downlink beam deactivation command.

Optionally, the fourth processing module 1202 is further configured to, start a downlink activation timer in a case that a downlink deactivation timer times out, or that a downlink beam activation command is received, or that a downlink beam deactivation command is received.

Optionally, the beam activation command includes an uplink beam activation command.

The fourth processing module 1202 is further configured to: activate transmission through an uplink data channel according to an uplink beam activation command; or activate transmission through an uplink control channel according to the uplink beam activation command; or activate transmission through an uplink sounding channel according to the uplink beam activation command; or activate transmission of an uplink status report according to the uplink beam activation command; or activate transmission through an uplink random access channel according to the uplink beam activation command.

Optionally, the fourth processing module 1202 is further configured to start an uplink deactivation timer in a case that an uplink activation timer times out, or that an uplink beam deactivation command is received, or that an uplink beam activation command is received.

Optionally, the beam activation command includes an uplink beam deactivation command.

The fourth processing module 1202 is further configured to: terminate transmission through an uplink data channel according to the uplink beam deactivation command; or terminate transmission through an uplink control channel according to the uplink beam deactivation command; or terminate transmission through an uplink sounding channel according to the uplink beam deactivation command; or terminate transmission of an uplink status report according to the uplink beam deactivation command; or terminate transmission through an uplink random access channel according to the uplink beam deactivation command.

Optionally, the fourth processing module 1202 is further configured to start an uplink activation timer in a case that an uplink deactivation timer times out, or that an uplink beam activation command is received, or that an uplink beam deactivation command is received.

The UE provided by the present disclosure may perform the above-described method embodiments. Implementation principles and technical effects of the UE are similar to those of the method, and will not be repeated herein again.

Based on the same inventive concept, a base station is also provided in the present disclosure. Since the principle of solving a problem by the base station is similar to that of the multi-beam data processing method in the present disclosure, an implementation of the base station may be obtained by referring to the implementation of the method, and repeated description of the implementation will not be given again.

Referring to FIG. 12, FIG. 12 shows another structural diagram of a base station of the present disclosure. The base station 1300 includes a third transmission module 1301.

The third transmission module 1301 is configured to transmit a control command to a UE, wherein the control command includes a beam activation command and a beam deactivation command, the beam activation command is configured to activate data reception or data transmission on a relevant beam, and the beam deactivation command is configured to terminate data reception or data transmission on a relevant beam.

Optionally, the beam activation command includes a beam identifier and/or a duration of an activation timer.

The beam deactivation command includes a beam identifier and/or a duration of a deactivation timer.

The base station provided by the present disclosure may perform the above-described method embodiments. Implementation principles and technical effects of the base station are similar to those of the method, and will not be repeated herein again.

Based on the same inventive concept, a base station is also provided in the present disclosure. Since the principle of solving a problem by the base station is similar to that of the multi-beam data processing method in the present disclosure, an implementation of the base station may be obtained by referring to the implementation of the method, and repeated description of the implementation will not be given again.

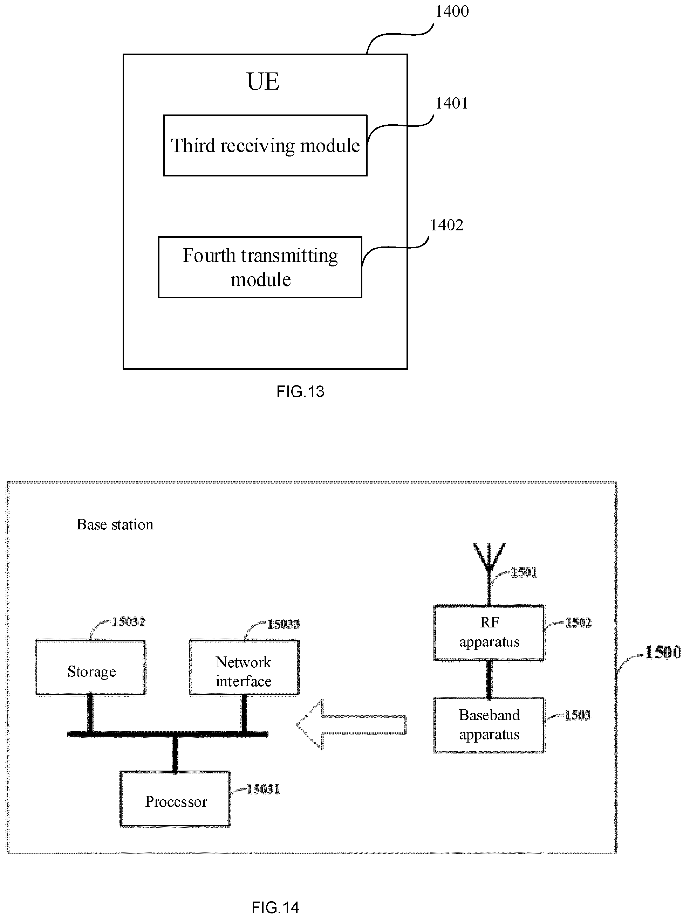

Referring to FIG. 13, FIG. 13 shows another structural diagram of a UE of the present disclosure. The UE 1400 includes a third receiving module 1401 and a fourth transmitting module 1402.

The third receiving module 1401 is configured to receive data through a downlink beam corresponding to an uplink beam having an uplink control channel.

The fourth transmitting module 1402 is configured to: in a case that reception on a downlink beam fails, indicate a failure indication of Out-of-Sync to a higher layer of the UE by a physical layer of the UE.

Optionally, failure of the reception of the downlink beam includes any one of the following: failure of reception of a downlink beam corresponding to an uplink beam having an uplink control channel; failure of the reception of the downlink beam corresponding to the uplink beam having the uplink control channel and failure of an uplink beam recovery corresponding to an uplink beam failure; failure of reception of downlink beams corresponding to all uplink beams having an uplink control channel; and failure of the reception of downlink beams corresponding to all uplink beams having an uplink control channel, and failure of uplink beam recovery corresponding to all uplink beam failures.

The UE provided by the present disclosure may perform the above-described method embodiments. Implementation principles and technical effects of the UE are similar to those of the method, and will not be repeated herein again.

The present disclosure provides a multi-beam data processing method and a multi-beam data processing device capable of supporting data transmission and/or data reception in a case that a UE is configured with multiple beams at the same time.

Structural schematic diagrams of hardware of a base station and a User Equipment (UE) are also provided below.

FIG. 14 is another structural schematic diagram of a base station provided by the present disclosure. As shown in FIG. 14, the network side device 1500 includes an antenna 1501, a radio frequency apparatus 1502, and a baseband apparatus 1503. The antenna 1501 is connected to the radio frequency apparatus 1502. In an uplink direction, the radio frequency apparatus 1502 receives information through the antenna 1501, and transmits the received information to the baseband apparatus 1503 for processing. In a downstream direction, the baseband apparatus 1503 processes the information to be transmitted and transmits the processed information to the radio frequency apparatus 1502, the radio frequency apparatus 1502 processes the received information and transmits the processed received information via the antenna 1501.

The above-described frequency-band processing device may be arranged in the baseband apparatus 1503, and the method performed by the network side device in the above embodiments may be implemented in the baseband apparatus 1503. The baseband apparatus includes a processor 15031 and a storage 15032.

The baseband apparatus 1503 may, for example, include at least one baseband board provided with a plurality of chips, as shown in FIG. 14. One of the plurality of chips is, for example, the processor 15031 connected to the storage 15032 for invoking a program in the storage 15032 and performing an operation of the network side device shown in the above method embodiments.

The baseband apparatus 1503 may further include a network interface 15033 configured to interact information with the radio frequency apparatus 1502. The network interface 15033 may be for example a Common Public Radio Interface (CPRI, for short).

The processor herein may be a processor, or may be a collection of a plurality of processing elements, for example, the processor may be a CPU, or may be an ASIC, or may be one or more integrated circuits, such as one or more microprocessor DSPs, or one or more Field Programmable Gate Arrays (FPGAs), configured to implement the methods performed by the above network side device. The storage element may be a storage or may a collection of a plurality of storage elements.

The storage 15032 may be a volatile storage or a non-volatile storage, or may include both volatile and non-volatile storages. The non-volatile storage may be a Read-Only Memory (ROM), a Programmable ROM (PROM), an Erasable PROM (EPROM), an Electrically EPROM (EEPROM), or a flash memory. The volatile storage may be a Random Access Memory (RAM), which serves as an external cache. By way of example but not limitation, many forms of RAM may be used, such as a Static RAM (SRAM), a Dynamic RAM (DRAM), a Synchronous DRAM (SDRAM), a Double Data Rate SDRAM (DDRSDRAM)), an Enhanced SDRAM (ESDRAM), a Synchronous link DRAM (SLDRAM) and a Direct Rambus RAM (DRRAM). The storage 15032 described in the present disclosure is intended to include, but is not limited to, these and any other suitable types of storages.

Specifically, the processor 15031 calls a program in the storage 15032 to execute the method executed by the base station in the above embodiments.

The base station provided by the present disclosure may perform the above-described method embodiments. Implementation principles and technical effects of the base station are similar to those of the method, and will not be repeated herein again.

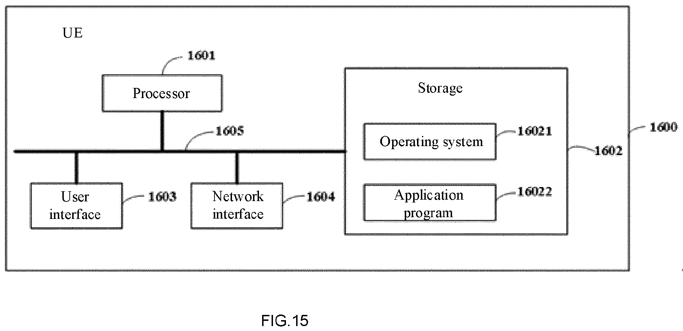

FIG. 15 is another structural schematic diagram of a User Equipment (UE) provided by the present disclosure. As shown in FIG. 15, the UE 1600 shown in FIG. 15 includes at least one processor 1601, a storage 1602, at least one network interface 1604, and a user interface 1603. Various components in the UE 1600 are coupled together by a bus system 1605. It will be appreciated that the bus system 1605 is used to enable connection communication among these components. The bus system 1605 includes a data bus, a power bus, a control bus, and a status signal bus. However, for clarity of illustration, various buses are designated as the bus system 1605 in FIG. 15.

The user interface 1603 may include a display, a keyboard, or a pointing device (e.g., a mouse, a trackball, a touch pad, or a touch screen, etc.).

It may be understood that the storage 1602 in some embodiments of the present disclosure may be a volatile storage or a non-volatile storage, or may include both volatile and non-volatile storages. The non-volatile storage may be a Read-Only Memory (ROM), a Programmable ROM (PROM), an Erasable PROM (EPROM), an Electrically EPROM (EEPROM), or a flash memory. The volatile storage may be a Random Access Memory (RAM), which serves as an external cache. By way of example but not limitation, many forms of RAM may be used, such as a Static RAM (SRAM), a Dynamic RAM (DRAM), a Synchronous DRAM (SDRAM), a Double Data Rate SDRAM (DDRSDRAM)), an Enhanced SDRAM (ESDRAM), a Synchronous link DRAM (SLDRAM) and Direct Rambus RAM (DRRAM). The storage 1602 in the systems and methods described by some embodiments of the present disclosure is intended to include, but is not limited to, these and any other suitable types of storages.

In some embodiments, the storage 1602 stores elements, executable modules or data structures, or a subset, or an extended set of the following: an operating system 16021 and an application program 16022.

The operating system 16021 includes various system programs, such as a framework layer, a core library layer, and a driver layer, for implementing various basic services and processing hardware-based tasks. The application program 16022 includes various application programs such as a Media Player, a Browser, and the like, for implementing various application services. Programs for implementing the methods in some embodiments of the present disclosure may be included in the application program 16022.

In the present disclosure, the processor 1601 may execute the method executed by the above UE through calling a program or an instruction stored in the storage 1602, specifically, a program or an instruction stored in the application program 16022.

The method disclosed by some embodiments of the present disclosure described above may be applied to, or implemented by, the processor 1601. The processor 1601 may be an integrated circuit chip with a signal processing capability. In implementation, steps in the method described above may be accomplished by integrated logic circuitry of hardware in the processor 1601 or instructions in a form of software. The processor 1601 described above may be a general purpose processor, a Digital Signal Processor (DSP), an Application Specific Integrated Circuit (ASIC), a Field Programmable Gate Array (FPGA) or other programmable logic devices, discrete gates or transistor logic devices, discrete hardware components. The disclosed methods, steps, and logic blocks in the present disclosure may be implemented or performed. The general purpose processor may be a microprocessor or the processor may be any conventional processor or the like. The steps in the method disclosed in connection with the present disclosure may be implemented directly by a hardware decoding processor, or by a combination of hardware and software modules in a decoding processor. A software module may be located in a storage medium known in the art such as a random access memory, a flash memory, a read only memory, a programmable read only memory, or an electrically erasable programmable memory, registers, etc. The storage medium is located in the storage 1602 and the processor 1601 reads information in the storage 16302 and performs steps of the method described above in conjunction with hardware of the processor.

It may be appreciated that the embodiments described in the present disclosure may be implemented in hardware, software, firmware, middleware, microcode, or a combination thereof. For a hardware implementation, the processing unit may be implemented in one or more Application Specific Integrated Circuits (ASICs), a Digital Signal Processing (DSP), a Digital Signal Processing Device (DSPD device or DSPD), a Programmable Logic Device (PLD), a Field Programmable Gate Array (FPGA), a general purpose processor, a controller, a microcontroller, a microprocessor, other electronic units for performing functions described in the present disclosure, or a combination thereof.

For a software implementation, techniques described in the present disclosure may be implemented by modules (e.g., processes, functions, etc.) that perform the functions described in the present disclosure. A software code may be stored in the storage and executed by a processor. The storage may be implemented inside the processor or external to the processor.

Specifically, the processor 1601 may invoke a program or an instruction stored in the storage 1602 to execute the method executed by the UE in the method embodiments described above.

The present disclosure also provides a computer readable storage medium having stored thereon a data transmission program, wherein in a case that the data transmission program is executed by a processor, the processor implements steps in the multi-beam-based data transmission method as described above. The computer readable storage medium may be volatile or non-volatile.

Those of ordinary skills in the art will appreciate that elements and algorithm steps in examples described in connection with embodiments disclosed in the present disclosure may be implemented in electronic hardware, or a combination of computer software and electronic hardware. Whether these functions are performed in a form of hardware or software depends on a specific application and a design constraint of a technical solution. Those skilled in the art may use different methods to implement the described functionality for each particular application, but such implementation should not be considered to go beyond the scope of the present disclosure.

Those skilled in the art may clearly understand that, for convenience and brevity of description, specific working processes of the systems, devices and units described above may be obtained by referring to a corresponding process in the method embodiments described above, and will not be described again herein.

In the embodiments provided by the present disclosure, it should be understood that the disclosed apparatus and methods may be implemented in other ways. For example, the apparatus embodiments described above are merely illustrative. For example, a division of units is only a logical function division, and another division of the unit may be implemented in a practical application. For example, multiple units or components may be combined or integrated into another system, or some features may be ignored, or not performed. Optionally, a coupling or a direct coupling or communication connection between elements shown or discussed may be an indirect coupling or a communication connection through some interfaces, devices or units, or may be in an electrical, mechanical or other form.

Elements described as separate elements may or may not be physically separate, elements shown as elements may or may not be physical elements, i.e. may be located in one place, or may also be distributed over a plurality of network elements. Some or all of the units may be selected according to actual needs to achieve a purpose of a technical solution of the present disclosure.

In addition, each functional unit in each embodiment of the present disclosure may be integrated in one processing unit, may be physically separated, or two or more of the units may be integrated in one unit.

The functions, if implemented in a form of software functional units and sold or used as separate products, may be stored in a computer readable storage medium. Based on this understanding, an essence of the technical solution of the present disclosure, or a part of the technical solution of the present disclosure contributing to the related art, or a part of the technical solution may be embodied in a form of a software product. The computer software product is stored in a storage medium, and includes a number of instructions used to cause a computer device (which may be a personal computer, a server, or a network device, etc.) to perform all or parts of the steps of the method described in various embodiments of the present disclosure. The aforementioned storage medium includes various medium capable of storing program codes, such as a USB disk, a removable hard disk, a ROM, a RAM, a magnetic disk, or a compact disc, or the like.

What is described above are optional embodiments of the present disclosure. The protection scope of the present disclosure is not limited thereto. Any person familiar with ordinary skills in the art may easily think of several modifications or replacements without departing from the principles of the present disclosure. These modifications and replacements are also within the scope of the present disclosure. Thus, the protection scope of the present disclosure should be in accord with the protection scope of the claims.

## Claims

1. A multi-beam-based data transmission method, applied to a base station and comprising:
configuring first correspondence relationship between one or more uplink beams and one or more downlink beams, and/or configuring second correspondence relationship between each of the one or more uplink beams and an uplink physical channel;
transmitting and/or receiving data according to the first correspondence relationship and/or the second correspondence relationship.

2. The method according to claim 1, further comprising:
transmitting a configuration message to a User Equipment (UE), wherein the configuration message is configured to instruct the UE to configure the first correspondence relationship between one or more uplink beams and one or more downlink beams and/or configure the second correspondence relationship between each of the one or more uplink beams and an uplink physical channel.

3. The method according to claim 1, wherein the uplink physical channel comprises one or more of an uplink data channel, an uplink control channel, an uplink sounding channel, and a random access channel;
transmitting and/or receiving data according to the first correspondence relationship and/or the second correspondence relationship comprises receiving data through the uplink physical channel corresponding to the uplink beam according to the second correspondence relationship.

4. The method according to claim 1, wherein the correspondence relationship between one or more uplink beams and one or more downlink beams, comprises any one of the following:
correspondence relationship in which one or more downlink beams correspond to one or more uplink beams having an uplink data channel;
correspondence relationship in which one or more downlink beams correspond to one or more uplink beams having an uplink control channel;
correspondence relationship in which one or more downlink beams correspond to one or more uplink beams having an uplink sounding channel; and
correspondence relationship in which one or more downlink beams correspond to one or more uplink beams having a random access channel.

5. The method according to claim 4, wherein transmitting and/or receiving data according to the first correspondence relationship and/or the second correspondence relationship comprises:
in a case that one or more downlink beams correspond to an uplink beam having an uplink data channel, transmitting downlink data on the one or more downlink beams, receiving uplink data corresponding to the downlink data on the uplink data channel of the uplink beam;
or,
in a case that one or more downlink beams correspond to an uplink beam having an uplink control channel, transmitting downlink data on the one or more downlink beams, receiving control information corresponding to the downlink data on the uplink control channel of the uplink beam;
or,
in a case that one or more downlink beams correspond to an uplink beam having an uplink sounding channel, transmitting downlink data on the one or more downlink beams, receiving a sounding signal corresponding to the downlink data on the uplink sounding channel of the uplink beam;
or,
in a case that one or more downlink beams correspond to an uplink beam having an uplink random access channel, transmitting downlink data on the downlink beam, receiving a random access signal corresponding to the downlink data on the random access channel of the uplink beam;
or,
in a case that a downlink beam corresponds to one or more uplink beams having an uplink data channel, receiving uplink data on the one or more uplink beams, transmitting control information and/or feedback information corresponding to the uplink data on a downlink channel of the downlink beam;
or
in a case that a downlink beam corresponds to one or more uplink beams having an uplink control channel, receiving uplink control information on the one or more uplink beams, transmitting downlink data and/or downlink control information corresponding to the uplink control information on the downlink beam;
or,
in a case that a downlink beam corresponds to one or more uplink beams having an uplink sounding channel, receiving a sounding signal on the one or more uplink beams, transmitting downlink data and/or downlink control information corresponding to the sounding signal on the downlink beam;
or,
in a case that a downlink beam corresponds to one or more uplink beams having an uplink random access channel, receiving a random access signal on the one or more uplink beams, transmitting downlink data and/or downlink control information corresponding to the random access signal on the downlink beam.

6. The method according to any one of claims 1 to 5, wherein the uplink beam is a single uplink transmission beam, an uplink transmission beam pair, an uplink transmission beam group, or an uplink transmission beam set; and
the downlink beam is a single downlink transmission beam, a downlink transmission beam pair, a downlink transmission beam group, or a downlink transmission beam set.

7. A multi-beam-based data transmission method, applied to a User Equipment (UE) and comprising:
receiving a configuration message transmitted by a base station;
establishing first correspondence relationship between one or more uplink beams and one or more downlink beams, and/or establishing second correspondence relationship between each of the one or more uplink beams and an uplink physical channel, based on the configuration message; and
transmitting and/or receiving data according to the first correspondence relationship and/or the second correspondence relationship.

8. The method according to claim 7, wherein the uplink physical channel comprises one or more of an uplink data channel, an uplink control channel, an uplink sounding channel, and a random access channel;
transmitting and/or receiving data according to the first correspondence relationship and/or the second correspondence relationship comprises transmitting data through the uplink physical channel corresponding to the uplink beam according to the second correspondence relationship.

9. The method according to claim 7, wherein the correspondence relationship between one or more uplink beams and one or more downlink beams, comprises any one of the following:
correspondence relationship in which one or more downlink beams correspond to one or more uplink beams having an uplink data channel;
correspondence relationship in which one or more downlink beams correspond to one or more uplink beams having an uplink control channel;
correspondence relationship in which one or more downlink beams correspond to one or more uplink beams having an uplink sounding channel; and
correspondence relationship in which one or more downlink beams correspond to one or more uplink beams having a random access channel.

10. The method according to claim 7, wherein transmitting and/or receiving data according to the first correspondence relationship and/or the second correspondence relationship comprises:
in a case that one or more downlink beams correspond to an uplink beam having an uplink data channel, receiving downlink data on the one or more downlink beams, transmitting uplink data corresponding to the downlink data on the uplink data channel of the uplink beam;
or,
in a case that one or more downlink beams correspond to an uplink beam having an uplink control channel, receiving downlink data on the one or more downlink beams, transmitting control information corresponding to the downlink data on the uplink control channel of the uplink beam;
or,
in a case that one or more downlink beams correspond to an uplink beam having an uplink sounding channel, receiving downlink data on the one or more downlink beams, receiving a sounding signal corresponding to the downlink data on the uplink sounding channel of the uplink beam;
or,
in a case that one or more downlink beams correspond to an uplink beam having an uplink random access channel, receiving downlink data on the downlink beam, transmitting a random access signal corresponding to the downlink data on the random access channel of the uplink beam;
or,
in a case that a downlink beam corresponds to one or more uplink beams having an uplink data channel, transmitting uplink data on the one or more uplink beams, receiving control information and/or feedback information corresponding to the uplink data on a downlink channel of the downlink beam;
or
in a case that a downlink beam corresponds to one or more uplink beams having an uplink control channel, transmitting uplink control information on the one or more uplink beams, receiving downlink data and/or downlink control information corresponding to the uplink control information on the downlink beam;
or,
in a case that a downlink beam corresponds to one or more uplink beams having an uplink sounding channel, transmitting a sounding signal on the one or more uplink beams, receiving downlink data and/or downlink control information corresponding to the sounding signal on the downlink beam;
or,
in a case that a downlink beam corresponds to one or more uplink beams having an uplink random access channel, transmitting a random access signal on the one or more uplink beams, receiving downlink data and/or downlink control information corresponding to the random access signal on the downlink beam.

11. The method according to any one of claims 7 to 10, wherein the uplink beam is a single uplink transmission beam, an uplink transmission beam pair, an uplink transmission beam group, or an uplink transmission beam set,
the downlink beam is a single downlink transmission beam, a downlink transmission beam pair, a downlink transmission beam group, or a downlink transmission beam set.

12. A multi-beam-based data transmission method comprising:
configuring correspondence relationship between a Hybrid Automatic Repeat Request (HARQ) entity and a beam; and
transmitting and/or receiving data on a HARQ process of the HARQ entity corresponding to the beam according to the correspondence relationship.

13. The method according to claim 12, wherein the correspondence relationship between the HARQ entity and the beam comprises any one of the following:
correspondence relationship in which a HARQ entity corresponds to a uplink-downlink beam pair;
correspondence relationship in which a HARQ entity corresponds to a uplink beam;
correspondence relationship in which a HARQ entity corresponds to a downlink beam;
correspondence relationship in which a HARQ entity corresponds to a group of uplink-downlink beam pairs;
correspondence relationship in which a HARQ entity corresponds to a group of downlink beams; and
correspondence relationship in which a HARQ entity corresponds to a group of uplink beams.

14. The method according to claim 13, wherein the group of uplink-downlink beam pairs comprises at least one Physical Uplink Control Channel (PUCCH) uplink beam.

15. A multi-beam-based data transmission method, applied to a User Equipment (UE) and comprising:
receiving a control command transmitted by a network side; and
activating data reception or data transmission on an uplink beam or a downlink beam in a case that the control command is a beam activation command, terminating data reception or data transmission on an uplink beam or a downlink beam in a case that the control command is a beam deactivation command.

16. The method according to claim 15, wherein the beam activation command comprises a beam identifier,
activating data reception or data transmission on the uplink beam or the downlink beam comprises activating data reception or data transmission on the uplink beam or the downlink beam corresponding to the beam identifier according to the beam identifier in the beam activation command;
the beam deactivation command comprises a beam identifier;
terminating data reception or data transmission on the uplink beam or the downlink beam comprises terminating data reception or data transmission on the uplink beam or the downlink beam corresponding to the beam identifier according to the beam identifier in the beam deactivation command.

17. The method according to claim 15, wherein the beam activation command comprises a duration of an uplink activation timer or a downlink activation timer, activating data reception or data transmission on the uplink beam or the downlink beam comprises activating data reception or data transmission on the uplink beam or the downlink beam corresponding to the uplink activation timer or the downlink activation timer according to the duration of the uplink activation timer or the downlink activation timer in the beam activation command;
the beam deactivation command comprises a duration of an uplink deactivation timer or a downlink deactivation timer, terminating data reception or data transmission on the uplink beam or the downlink beam comprises: terminating data reception or data transmission on the uplink beam or the downlink beam corresponding to the uplink deactivation timer or the downlink deactivation timer according to the duration of the uplink deactivation timer or the downlink deactivation timer in the beam deactivation command.

18. The method according to claim 15, wherein the beam activation command comprises a downlink beam activation command,
activating data reception or data transmission on the uplink beam or the downlink beam comprises activating reception through a downlink data channel according to the downlink beam activation command, or activating reception through a downlink control channel according to the downlink beam activation command.

19. The method according to claim 17, further comprising:
starting a downlink deactivation timer in a case that the downlink activation timer times out, or that a downlink beam deactivation command is received, or that the downlink beam activation command is received.

20. The method according to claim 15, wherein,
the beam activation command comprises a downlink beam deactivation command;
terminating data reception or data transmission on the uplink beam or the downlink beam comprises terminating reception through a downlink data channel according to the downlink beam deactivation command, or terminating reception through a downlink control channel according to the downlink beam deactivation command.

21. The method according to claim 17, further comprising:
starting a downlink activation timer in a case that a downlink deactivation timer times out, or that a downlink beam activation command is received, or that a downlink beam deactivation command is received.

22. The method according to claim 15, wherein the beam activation command comprises an uplink beam activation command;
activating data reception or data transmission on the uplink beam or the downlink beam comprises:
activating transmission through an uplink data channel according to the uplink beam activation command;
or,
activating transmission through an uplink control channel according to the uplink beam activation command;
or
activating transmission through an uplink sounding channel according to the uplink beam activation command;
or
activating transmission of an uplink status report according to the uplink beam activation command;
or
activating transmission through an uplink random access channel according to the uplink beam activation command.

23. The method according to claim 17, further comprising:
starting an uplink deactivation timer in a case that an uplink activation timer times out, or that an uplink beam deactivation command is received, or that an uplink beam activation command is received.

24. The method according to claim 15, wherein the beam activation command comprises an uplink beam deactivation command;
terminating data reception or data transmission on an uplink beam or a downlink beam comprises:
terminating transmission through an uplink data channel according to the uplink beam deactivation command;
or,
terminating transmission through an uplink control channel according to the uplink beam deactivation command;
or
terminating transmission through an uplink sounding channel according to the uplink beam deactivation command;
or
terminating transmission of an uplink status report according to the uplink beam deactivation command;
or
terminating transmission through an uplink random access channel according to the uplink beam deactivation command.

25. The method according to claim 17, further comprising:
starting an uplink deactivation timer in a case that an uplink deactivation timer times out, or that an uplink beam activation command is received, or that an uplink beam deactivation command is received.

26. The method according to any one of claims 15 to 25, wherein the uplink beam is a single uplink transmission beam, an uplink transmission beam pair, an uplink transmission beam group, or an uplink transmission beam set;
the downlink beam is a single downlink transmission beam, a downlink transmission beam pair, a downlink transmission beam group, or a downlink transmission beam set.

27. A multi-beam-based data transmission method, applied to a base station and comprising:
transmitting a control command to a User Equipment (UE), wherein the control command comprises a beam activation command and a beam deactivation command, the beam activation command is configured to activate data reception or data transmission on an uplink beam or a downlink beam, and the beam deactivation command is configured to terminate data reception or data transmission on the uplink beam or the downlink beam.

28. The method according to claim 27, wherein the beam activation command comprises a beam identifier and/or a duration of an uplink activation timer or a downlink activation timer, and
the beam deactivation command comprises a beam identifier and/or a duration of an uplink deactivation timer or a downlink deactivation timer.

29. The method according to claim 27 or 28, wherein the uplink beam is a single uplink transmission beam, an uplink transmission beam pair, an uplink transmission beam group, or an uplink transmission beam set;
the downlink beam is a single downlink transmission beam, a downlink transmission beam pair, a downlink transmission beam group, or a downlink transmission beam set.

30. A multi-beam-based data transmission method, applied to a User Equipment (UE) and comprising:
receiving data through a downlink beam corresponding to an uplink beam having an uplink control channel;
in a case that reception of the downlink beam fails, indicating a failure indication of Out-of-Sync to a higher layer to a physical layer of the UE.

31. The method according to claim 30, wherein failure of the reception of the downlink beam comprises any one of the following:
failure of reception of a downlink beam corresponding to an uplink beam having an uplink control channel;
failure of the reception of the downlink beam corresponding to the uplink beam having the uplink control channel, and failure of an uplink beam recovery corresponding to an uplink beam failure;
failure of reception of downlink beams corresponding to all uplink beams having an uplink control channel; and
failure of the reception of downlink beams corresponding to all uplink beams having an uplink control channel, and failure of uplink beam recovery corresponding to all uplink beam failures.

32. The method according to claim 30 or 31, wherein the uplink beam is a single uplink transmission beam, an uplink transmission beam pair, an uplink transmission beam group, or an uplink transmission beam set;
the downlink beam is a single downlink transmission beam, a downlink transmission beam pair, a downlink transmission beam group, or a downlink transmission beam set.

33. A base station, comprising:
a first processing module, configured to configure first correspondence relationship between one or more uplink beams and one or more downlink beams, and/or configure second correspondence relationship between each of the one or more uplink beams and an uplink physical channel;
a first transceiving module, configured to transmit and/or receive data according to the first correspondence relationship and/or the second correspondence relationship.

34. The base station according to claim 33, wherein,
the first transceiving module is further configured to transmit a configuration message to a User Equipment (UE), wherein the configuration message is configured to instruct the UE to configure the first correspondence relationship between one or more uplink beams and one or more downlink beams and/or configure the second correspondence relationship between each of the one or more uplink beams and an uplink physical channel.

35. The base station according to claim 33, wherein the uplink physical channel comprises one or more of an uplink data channel, an uplink control channel, an uplink sounding channel, and a random access channel;
the first transceiving module is further configured to receive data through the uplink physical channel corresponding to the uplink beam according to the second correspondence relationship.

36. The base station according to claim 33, wherein the correspondence relationship between one or more uplink beams and one or more downlink beams, comprises any one of the following:
correspondence relationship in which one or more downlink beams correspond to one or more uplink beams having an uplink data channel;
correspondence relationship in which one or more downlink beams correspond to one or more uplink beams having an uplink control channel;
correspondence relationship in which one or more downlink beams correspond to one or more uplink beams having an uplink sounding channel; and
correspondence relationship in which one or more downlink beams correspond to one or more uplink beams having a random access channel.

37. The base station according to claim 36, wherein the first transceiving module is further configured to:
in a case that one or more downlink beams correspond to an uplink beam having an uplink data channel, transmit downlink data on the one or more downlink beams, receive uplink data corresponding to the downlink data on the uplink data channel of the uplink beam;
or,
in a case that one or more downlink beams correspond to an uplink beam having an uplink control channel, transmit downlink data on the one or more downlink beams, receive control information corresponding to the downlink data on the uplink control channel of the uplink beam;
or,
in a case that one or more downlink beams correspond to an uplink beam having an uplink sounding channel, transmit downlink data on the one or more downlink beams, receive a sounding signal corresponding to the downlink data on the uplink sounding channel of the uplink beam;
or,
in a case that one or more downlink beams correspond to an uplink beam having an uplink random access channel, transmit downlink data on the downlink beam, receive a random access signal corresponding to the downlink data on the random access channel of the uplink beam;
or,
in a case that a downlink beam corresponds to one or more uplink beams having an uplink data channel, receive uplink data on the one or more uplink beams, transmit control information and/or feedback information corresponding to the uplink data on a downlink channel of the downlink beam;
or
in a case that a downlink beam corresponds to one or more uplink beams having an uplink control channel, receive uplink control information on the one or more uplink beams, transmit downlink data and/or downlink control information corresponding to the uplink control information on the downlink beam;
or,
in a case that a downlink beam corresponds to one or more uplink beams having an uplink sounding channel, receive a sounding signal on the one or more uplink beams, transmit downlink data and/or downlink control information corresponding to the sounding signal on the downlink beam;
or,
in a case that a downlink beam corresponds to one or more uplink beams having an uplink random access channel, receive a random access signal on the one or more uplink beams, transmit downlink data and/or downlink control information corresponding to the random access signal on the downlink beam.

38. The base station according to any one of claims 33 to 37, wherein the uplink beam is a single uplink transmission beam, an uplink transmission beam pair, an uplink transmission beam group, or an uplink transmission beam set; and
the downlink beam is a single downlink transmission beam, a downlink transmission beam pair, a downlink transmission beam group, or a downlink transmission beam set.

39. A user equipment (UE), comprising:
a first receiving module, configured to receive a configuration message transmitted by a base station;
a second processing module, configured to establish first correspondence relationship between one or more uplink beams and one or more downlink beams, and/or establish second correspondence relationship between each of the one or more uplink beams and an uplink physical channel, based on the configuration message; and
a second transceiving module, configured to transmit and/or receiving data according to the first correspondence relationship and/or the second correspondence relationship.

40. The UE according to claim 39, wherein the uplink physical channel comprises one or more of an uplink data channel, an uplink control channel, an uplink sounding channel, and a random access channel;
the second transceiving module is further configured to transmit data through the uplink physical channel corresponding to the uplink beam according to the second correspondence relationship.

41. The UE according to claim 39, wherein the correspondence relationship between one or more uplink beams and one or more downlink beams, comprises any one of the following:
correspondence relationship in which one or more downlink beams correspond to one or more uplink beams having an uplink data channel;
correspondence relationship in which one or more downlink beams correspond to one or more uplink beams having an uplink control channel;
correspondence relationship in which one or more downlink beams correspond to one or more uplink beams having an uplink sounding channel; and
correspondence relationship in which one or more downlink beams correspond to one or more uplink beams having a random access channel.

42. The UE according to claim 39, wherein the second transceiving module is further configured to:
in a case that one or more downlink beams correspond to an uplink beam having an uplink data channel, receive downlink data on the one or more downlink beams, transmit uplink data corresponding to the downlink data on the uplink data channel of the uplink beam;
or,
in a case that one or more downlink beams correspond to an uplink beam having an uplink control channel, receive downlink data on the one or more downlink beams, transmit control information corresponding to the downlink data on the uplink control channel of the uplink beam;
or,
in a case that one or more downlink beams correspond to an uplink beam having an uplink sounding channel, receive downlink data on the one or more downlink beams, receive a sounding signal corresponding to the downlink data on the uplink sounding channel of the uplink beam;
or,
in a case that one or more downlink beams correspond to an uplink beam having an uplink random access channel, receive downlink data on the downlink beam, transmit a random access signal corresponding to the downlink data on the random access channel of the uplink beam;
or,
in a case that a downlink beam corresponds to one or more uplink beams having an uplink data channel, transmit uplink data on the one or more uplink beams, receive control information and/or feedback information corresponding to the uplink data on a downlink channel of the downlink beam;
or
in a case that a downlink beam corresponds to one or more uplink beams having an uplink control channel, transmit uplink control information on the one or more uplink beams, receive downlink data and/or downlink control information corresponding to the uplink control information on the downlink beam;
or,
in a case that a downlink beam corresponds to one or more uplink beams having an uplink sounding channel, transmit a sounding signal on the one or more uplink beams, receive downlink data and/or downlink control information corresponding to the sounding signal on the downlink beam;
or,
in a case that a downlink beam corresponds to one or more uplink beams having an uplink random access channel, transmit a random access signal on the one or more uplink beams, receive downlink data and/or downlink control information corresponding to the random access signal on the downlink beam..

43. The UE according to any one of claims 39 to 42, wherein the uplink beam is a single uplink transmission beam, an uplink transmission beam pair, an uplink transmission beam group, or an uplink transmission beam set,
the downlink beam is a single downlink transmission beam, a downlink transmission beam pair, a downlink transmission beam group, or a downlink transmission beam set.

44. A multi-beam-based data transmission device, comprising:
a third processing module, configured to configure correspondence relationship between a Hybrid Automatic Repeat Request (HARQ) entity and a beam;
a third transceiving module, configured to transmit and/or receive data on a HARQ process of the HARQ entity corresponding to the beam according to the correspondence relationship.

45. The device according to claim 44, wherein the correspondence relationship between the HARQ entity and the beam comprises any one of the following:
correspondence relationship in which a HARQ entity corresponds to a uplink-downlink beam pair;
correspondence relationship in which a HARQ entity corresponds to a uplink beam;
correspondence relationship in which a HARQ entity corresponds to a downlink beam;
correspondence relationship in which a HARQ entity corresponds to a group of uplink-downlink beam pairs;
correspondence relationship in which a HARQ entity corresponds to a group of downlink beams; and
correspondence relationship in which a HARQ entity corresponds to a group of uplink beams.

46. The device according to claim 45, wherein the group of uplink-downlink beam pairs comprises at least one Physical Uplink Control Channel (PUCCH) uplink beam.

47. A User Equipment (UE), comprising:
a second receiving module, configured to receive a control command transmitted by a network side; and
a fourth processing module, configured to activate data reception or data transmission on an uplink beam or a downlink beam in a case that the control command is a beam activation command and terminate data reception or data transmission on an uplink beam or a downlink beam in a case that the control command is a beam deactivation command.

48. The UE according to claim 47, wherein the beam activation command comprises a beam identifier;
the fourth processing module is further configured to activate data reception or data transmission on the uplink beam or the downlink beam corresponding to the beam identifier according to the beam identifier in the beam activation command;
the beam deactivation command comprises a beam identifier;
the fourth processing module is further configured to terminate data reception or data transmission on the uplink beam or the downlink beam corresponding to the beam identifier according to the beam identifier in the beam deactivation command.

49. The UE according to claim 47, wherein the beam activation command comprises a duration of an uplink activation timer or a downlink activation timer,
the fourth processing module is further configured to activate data reception or data transmission on the uplink beam or the downlink beam corresponding to the uplink activation timer or the downlink activation timer according to the duration of the uplink activation timer or the downlink activation timer in the beam activation command;
the beam deactivation command comprises a duration of an uplink deactivation timer or a downlink deactivation timer,
the fourth processing module is further configured to terminate data reception or data transmission on the uplink beam or the downlink beam corresponding to the uplink deactivation timer or the downlink deactivation timer according to the duration of the uplink deactivation timer or the downlink deactivation timer in the beam deactivation command.

50. The UE according to claim 47, wherein the beam activation command comprises a downlink beam activation command;
the fourth processing module is further configured to activate reception through a downlink data channel according to the downlink beam activation command, or activate reception through a downlink control channel according to the downlink beam activation command.

51. The UE according to claim 49, wherein the fourth processing module is further configured to:
start a downlink deactivation timer in a case that the downlink activation timer times out, or that a downlink beam deactivation command is received, or that the downlink beam activation command is received.

52. The UE according to claim 47, wherein the beam activation command comprises a downlink beam deactivation command;
the fourth processing module is further configured to terminate reception through a downlink data channel according to the downlink beam deactivation command, or terminate reception through a downlink control channel according to the downlink beam deactivation command.

53. The UE according to claim 49, wherein the fourth processing module is further configured to:
start a downlink activation timer in a case that a downlink deactivation timer times out, or that a downlink beam activation command is received, or that a downlink beam deactivation command is received.

54. The UE according to claim 47, wherein he beam activation command comprises an uplink beam activation command;
the fourth processing module is further configured to: activate transmission through an uplink data channel according to the uplink beam activation command; or, activate transmission through an uplink control channel according to the uplink beam activation command; or activate transmission through an uplink sounding channel according to the uplink beam activation command; or activate transmission of an uplink status report according to the uplink beam activation command; or activating transmission through an uplink random access channel according to the uplink beam activation command.

55. The UE according to claim 49, wherein the fourth processing module is further configured to:
start an uplink deactivation timer in a case that an uplink activation timer times out, or that an uplink beam deactivation command is received, or that an uplink beam activation command is received.

56. The UE according to claim 47, wherein the beam activation command comprises an uplink beam deactivation command;
the fourth processing module is further configured to: terminate transmission through an uplink data channel according to the uplink beam deactivation command; or, terminate transmission through an uplink control channel according to the uplink beam deactivation command; or terminate transmission through an uplink sounding channel according to the uplink beam deactivation command; or terminate transmission of an uplink status report according to the uplink beam deactivation command; or terminate transmission through an uplink random access channel according to the uplink beam deactivation command.

57. The UE according to claim 49, wherein the fourth processing module is further configured to:
start an uplink activation timer in a case that an uplink deactivation timer times out, or that an uplink beam activation command is received, or that an uplink beam deactivation command is received.

58. The UE according to any one of claims 47 to 57, wherein the uplink beam is a single uplink transmission beam, an uplink transmission beam pair, an uplink transmission beam group, or an uplink transmission beam set;
the downlink beam is a single downlink transmission beam, a downlink transmission beam pair, a downlink transmission beam group, or a downlink transmission beam set.

59. A base station, comprising:
a third transmitting module, configured to transmit a control command to a User Equipment (UE), wherein the control command comprises a beam activation command and a beam deactivation command, the beam activation command is configured to activate data reception or data transmission on an uplink beam or a downlink beam, and the beam deactivation command is configured to terminate data reception or data transmission on the uplink beam or the downlink beam.

60. The base station according to claim 59, wherein the beam activation command comprises a beam identifier and/or a duration of an uplink activation timer or a downlink activation timer, and
the beam deactivation command comprises a beam identifier and/or a duration of an uplink deactivation timer or a downlink deactivation timer.

61. The base station according to claim 59 or 60, wherein the uplink beam is a single uplink transmission beam, an uplink transmission beam pair, an uplink transmission beam group, or an uplink transmission beam set;
the downlink beam is a single downlink transmission beam, a downlink transmission beam pair, a downlink transmission beam group, or a downlink transmission beam set.

62. A user equipment (UE), comprising:
a third receiving module, configured to receive data through a downlink beam corresponding to an uplink beam having an uplink control channel;
a fourth transmitting module, configured to, in a case that reception of the downlink beam fails, indicate a failure indication of Out-of-Sync to a higher layer to a physical layer of the UE.

63. The UE according to claim 62, wherein failure of the reception of the downlink beam comprises any one of the following:
failure of reception of a downlink beam corresponding to an uplink beam having an uplink control channel;
failure of the reception of the downlink beam corresponding to the uplink beam having the uplink control channel, and failure of an uplink beam recovery corresponding to an uplink beam failure;
failure of reception of downlink beams corresponding to all uplink beams having an uplink control channel; and
failure of the reception of downlink beams corresponding to all uplink beams having an uplink control channel, and failure of uplink beam recovery corresponding to all uplink beam failures.

64. The UE according to claim 62 or 63, wherein the uplink beam is a single uplink transmission beam, an uplink transmission beam pair, an uplink transmission beam group, or an uplink transmission beam set;
the downlink beam is a single downlink transmission beam, a downlink transmission beam pair, a downlink transmission beam group, or a downlink transmission beam set.

65. A terminal, comprising:
a storage and a processor,
wherein the storage stores a computer program executable by the processor, when the processor executes the computer program, the processor implements steps in the multi-beam-based data transmission method according to any one of claims 7 to 11, or implements steps in the multi-beam-based data transmission method according to any one of claims 12 to 14, or implements the steps in the multi-beam-based data transmission method according to any one of claims 15 to 26, or implements the steps in the multi-beam-based data transmission method according to any one of claims 30 to 32.

66. A base station, comprising:
a storage and a processor,
wherein the storage stores a computer program executable by the processor, when the processor executes the computer program, the processor implements steps in the multi-beam-based data transmission method according to any one of claims 1 to 6, or implements steps in the multi-beam-based data transmission method according to any one of claims 12 to 14, or implements the steps in the multi-beam-based data transmission method according to any one of claims 27 to 29.

67. A computer readable storage medium, comprising:
data and programs stored on the computer readable storage medium, wherein when the data and the program are executed by a processor, the processor implements the steps in the multi-beam-based data transmission method according to any one of claims 1 to 6; or implements the steps in the multi-beam-based data transmission method according to any one of claims 7 to 11; or implements the steps in the multi-beam-based data transmission method according to any one of claims 12 to 14; or implements the steps in the multi-beam-based data transmission method according to any one of claims 15 to 25; or implements the steps in the multi-beam-based data transmission method according to any one of claims 26 to 28; or implements the steps in the multi-beam-based data transmission method according to any one of claims 29 to 31.
